# EUROPEAN PATENT SPECIFICATION

(11) **EP 1 313 232 B1**
(45) Date of publication and mention of the grant of the patent: **25.08.2004**
(21) Application number: 02025659.0
(22) Date of filing: 19.11.2002
(51) Int. Cl.: H04B 7/005

(54) **Method and apparatus for uplink transmission power control in a cdma communication system**
Verfahren und Vorrichtung für die Leistungsregelung des Aufwärtskanals in einem CDMA Kommunikationssystem
Procédé et appareil pour la commande de puissance de la liaison montante dans un système de communication AMRC

(30) Priority: 19.11.2001 KR 2001072135; 06.04.2002 KR 2002018817; 29.08.2002 KR 2002051629
(43) Date of publication of application: 21.05.2003
(73) Proprietor: SAMSUNG ELECTRONICS CO., LTD., Suwon-City, Kyungki-do (KR)
(72) Inventor: Hwang, Sung-Oh, Yongin-shi, Kyonggi-do (KR); Lee, Ju-Ho, Paldal-gu, Suwon-shi, Kyonggi-do (KR); Lee, Kook-Heui, Pundang-gu, Songnam-shi, Kyonggi-do (KR); Chang, Jin-Weon, Seoul (KR); Choi, Sung-Ho, Songnam-shi, Kyonggi-do (KR); Kwon, Hwan-Joon, Kangdong-su, Seoul (KR); Lee, Hyeon-Woo, Suwon-shi, Kyonggi-do (KR); Seo, Myeong-Sook, Suwon-shi, Kyonggi-do (KR)
(74) Representative: Grünecker, Kinkeldey, Stockmair & Schwanhäusser Anwaltssozietät

(56) References cited:
- US-A- 5 987 326
- LUCENT TECHNOLOGIES INC: "DOWNLINK AND UPLINK STRUCTURES FOR HSDPA" 3GPP TSG RAN WG 1, XX, XX, 21 November 2000 (2000-11-21), pages 1-7, XP002206395
- SAMSUNG: "UL Power Control for HSDPA" 3GPP TSG-RAN WG1 #22, 19 - 23 November 2001, XP002229769 Jeju, Korea
- SAMSUNG: "UL Power Control for HSDPA" 3GPP TSG-RAN WG1 #23, 8 - 11 January 2002, XP002229770 Espoo, Finland
- MOTOROLA: "HS-DPCCH Power Control in Soft-Handoff" 3GPP TSG-RAN WG1 #26, 13 - 16 May 2002, XP002229771 GyeongJu, Korea

## Description

The present invention relates generally to a method and an apparatus for uplink transmission power control in a CDMA communication system, and more particularly to a method and an apparatus for power control of uplink dedicated physical channels in a CDMA communication system.

High speed data packet access (hereinafter, referred to as "HSDPA") is a general term for a high speed-downlink shared channel (HS-DSCH) for supporting high speed downlink packet transmission in a CDMA communication system, control channels related to HS-DSCH, and apparatuses, methods, and systems for those channels. HSDPA requires advanced technology improving the capability of adapting to channel conditions beyond the technology needed to implement the existing mobile communication systems. The following three schemes have been introduced to HSDPA to support high-speed packet transmission.
(1) Adaptive Modulation and Coding Scheme (AMCS): A modulation and coding scheme (MCS) for a data channel is determined according to a channel condition between a cell and a user, thus increasing an overall use efficiency of the cell. The MCS is a combination of modulation and coding schemes. Consequently, a number of MCSs exist. The AMCS is an optimum MCS chosen among the MCSs according to the channel status between the cell and the user.
(2) N-channel Stop and Wait Hybrid Automatic Re-transmission Request (n-channel SAW HARQ); The n-channel SAW HARQ is a type of HARQ. In conventional Automatic Re-transmission Request (ARQ), an ACK (acknowledgment) signal and a retransmission packet are exchanged between a UE and a node B controller, while in HSDPA, the exchange occurs between the UE and a high-speed downlink shared channel (HS-DSCH) in the MAC layer of the node B. Another feature of the n-channel SAW HARQ is that, even when an ACK signal is not received, a plurality of packets can be transmitted on n logical channels. The node B does not transmit the next packet until it receives an ACK signal for the previous transmitted packet from the UE in typical Stop and Wait ARQ. In other words, the node B must await the ACK signal although it can transmit the next packet. On the contrary, in the n-channel SAW HARQ, the node B can transmit a plurality of next packets successively, even if it has not received the ACK signal for the previous transmitted packet, thereby increasing channel use efficiency. That is, if n logical channels are established between the UE and the node B and those logical channels can be identified by their channel numbers or their transmission time, the UE can determine on what channel a packet is received at a certain point in time and can rearrange received packets in the right reception order.
(3) Fast Cell Selection (FCS): The FCS scheme enables an HSDPA UE in a soft handover region (SHR) to receive packets from only a cell in the best channel condition, so that the overall interference is reduced. If another cell exhibits the best channel condition, the UE receives packets from the cell on an HS-DSCH with minimum communication interruption.

Due to the introduction of the above-mentioned new schemes, new control signals, as will be described below, are exchanged between the UE and the node B (or cell) in HSDPA. The information to be transferred from the node B (or cell) to the UE includes channelization codes of an HS-DSCH in transmission, an MCS level used for an HS-DSCH, decoding-related information such as code information necessary in the interpretation of a received HS-DSCH, information about packets carried on an HS-DSCH, etc. The channelization codes are required by multi-code transmission basically employed in the HS-DSCH for high-speed transmission. Further, the information about packets may include information about the channel on which and the sequence in which each packet is received, HARQ information about the packet is first transmitted or retransmitted, etc. The information to be transferred from the UE to the node B (or cell) includes ACK/NACK (Negative Acknowledgment) for the received packets, channel conditions between the UE to the node B (or cell) for supporting AMC and FCS, etc. For FCS, the UE transmits a signal indicating the best cell to a node B (or cell) that offers the best-quality channel. If the best cell is changed, the UE reports its packet reception status to the new best station. Then, the new best node B provides necessary information to aid the UE in selecting the best cell correctly.

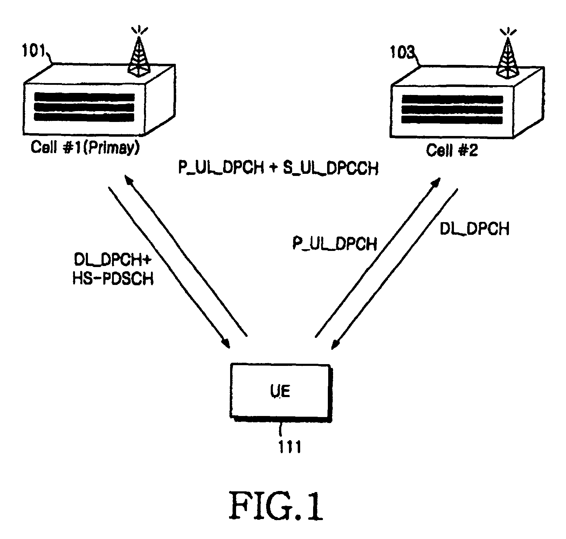

FIG. 1 illustrates downlink/uplink channels between a UE and a plurality of cells when the UE is in a soft handover region. Although FIG. 1 illustrates only two cells in the soft handover region for convenience of description, the problems presented in the following description in relation to FIG. 1 may also be caused when more than two cells are located in the soft handover region.

Referring to FIG. 1, cell #1 101 transmits an HS-DSCH to a UE I 11 and is called "Primary cell". A downlink dedicated physical channel (DL_DPCH) and a high speed physical downlink shared channel (HS-PDSCH) are transmitted from cell #1 to the UE 111, and a primary uplink dedicated physical channel (P_UL_DPCH) and a secondary uplink dedicated physical channel (S_UL_DPCH) are transmitted from the UE 111 to cell #1. Cell #2 103 is located adjacent to cell #1 101. Cell #2 transmits DL_DPCH to the UE 111 and receives a UL_DPCH from the UE 111.

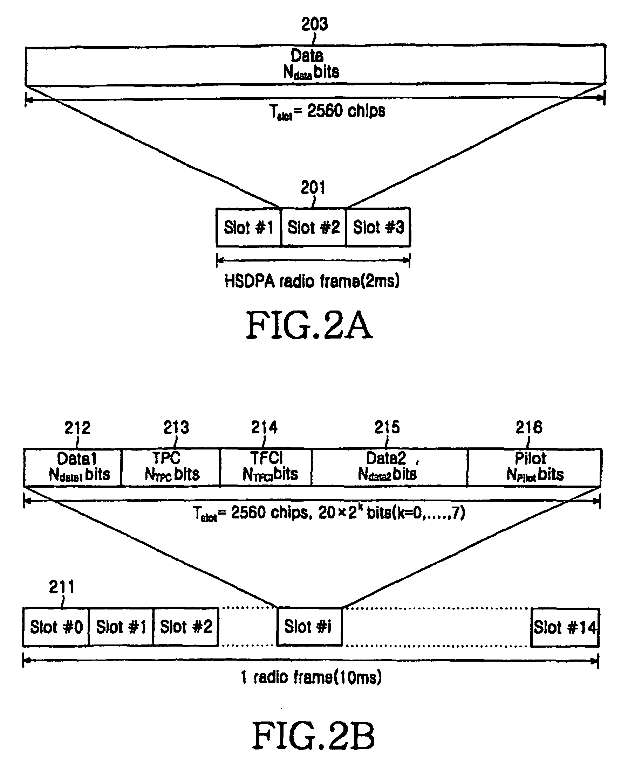

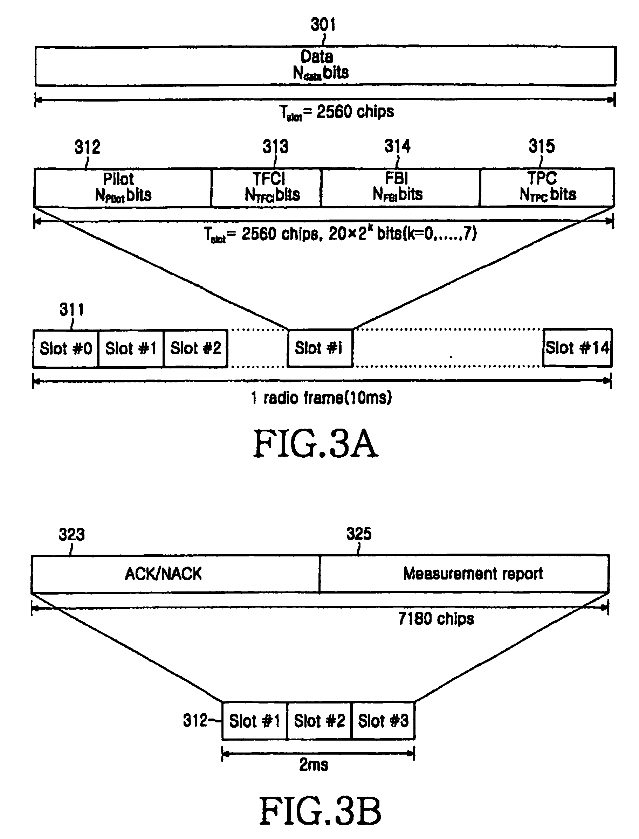

FIGs. 2A to 2C illustrate structures of the downlink channels illustrated in FIG. 1, and FIGs. 3A and 3B illustrate structures of the uplink channels illustrated in FIG. 1.

FIG. 2A illustrates the structure of an HS-PDSCH transmitted to the UE 111 from cell #1 101 illustrated in FIG. 1. The HS-PDSCH is comprised of three slots each with 0.667 msec in duration and each having a transmission rate determined according to an MCS level being employed and the number of channelization codes being employed. The channelization codes are used in configuring different uplink/downlink channels in an asynchronous mobile communication system, and have lengths ranging from 4 bits to 512 bits, each of which signifies a spreading factor of data.

FIG. 2B illustrates the structure of a DL-DPCH transmitted to the UE 111 from cell #1 101 and cell #2 102 illustrated in FIG. 1. The DL-DPCH comprises a downlink dedicated physical data channel (DL_DPDCH) and a downlink dedicated physical control channel (DL_DPCCH). In the structure of the DL-DPCH, user data such as higher layer signaling or voice data is transmitted through a first data field 212 and a second data field 215, each of which corresponds to the DL_DPDCH. In the structure of the DL-DPCH, the DL_DPCCH corresponds to each of a transmit power control command (TPC) field 213, a transmitted format combination indicator (TFCI) field 214, and a pilot field 216. The TPC field 213 transmits a power control command by which power for an uplink transmission from the UE to the cell is controlled. The TFCI field 214 transmits information about the TFC of the first data field 212 and the second data field 215, such as transmission speed, channel structure, and information necessary in channel decoding. The pilot field 216 has a preset pilot symbol sequence from which the UE estimates downlink channels from the cell to the UE. The DL-DPCH from the first data field 212 to the pilot field 216 is constituted by one slot having 2560 chips, and fifteen slots forming one radio frame with 10 ms in duration. The radio frame is the most basic physical transmission unit employed in 3GPP, which is a standard for asynchronous mobile communication systems. When the UE is located in a soft handover region, all cells (or node Bs) transmit the DL_DPCH to the UE. For example, referring to FIG. 1, cell #1 101 and cell #2 103 transmit the DL_DPCH to the UE 111.

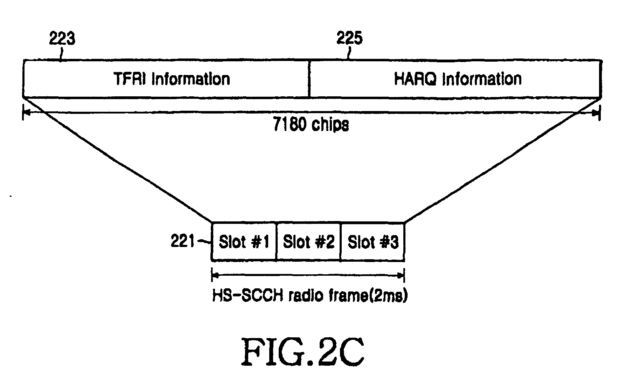

FIG. 2C illustrates the structure of a high-speed shared control channel (HS-SCCH). The HS-SCCH carries control information necessary in receiving the HS_DSCH transmitted from cell #1 101 to the UE 111 and is received alternately by UEs in a corresponding node B (or cell) providing an HSDPA service. The HS-SCCH can carry control information required in receiving the HS-DSCH to one UE or a plurality of UEs at a certain point of time. The IIS-SCCH has a basic unit of three slots 221 and transmits a transmitted format resource indicator (TFRI) information 223 and HARQ information 225 during the three slots 221. The TFRI 223 contains an MCS level used for the HS_DSCH, the number and type of the channelization codes, and necessary information in decoding the HS-DSCH. The HARQ information 225 indicates what channel is in transmission in the HSDPA employing an n-channel SAW HARQ, and whether the packet to be carried by the HS_PDSCH is a first-transmitted packet or a retransmitted packet due to errors. The HS-SCCH is a channel transmitted only from a cell transmitting HSPDA only to a UE receiving HSPDA, and is received only from a cell transmitting HSPDA even when the UE is located in a soft handover region. For example, referring to FIG. 1, only cell #1 101 transmitting the HS_DSCH can transmit the HS-SCCH to the UE 111.

FIGs. 3A and 3B illustrate the structures of uplink channels corresponding to the downlink channels illustrated in FIGs. 2A to 2C. FIG. 3A illustrates an uplink dedicated physical channel (UL_DPCH), which includes an uplink dedicated physical data channel (UL_DPDCH) and an uplink dedicated physical control channel (UL_DPCCH). The UL_DPDCH carries uplink control information or user information from the UE to at least one cell, and the UL_DPCCH carries physical control information and has fields having the same basic functions as those of the DL_DPCCH described above. The UL_DPDCH and UL_DPCCH are encoded through different channelization codes and transmitted by means of 1 channel and Q channel of a quadrature phase shift keying (QPSK). The UL_DPDCH has a basic transmission unit of 10 ms radio frame, which is comprised of 15 slots. The 15 slots include a pilot field 312, a TFCI field 313, a feedback information (FBI) field 314, and a TPC field 315. The pilot field 312 enables at least one cell receiving the UL_DPCH to estimate the uplink channel condition from the UE to the cell. The TFCI field 313 is a channel for transmitting a transmitted format combination indicator (TFCI), which indicates the channelization codes and transmission rate used in the UL_DPDCH, information required in decoding, or kinds of data carried by the UL_DPDCH. The FBI field 314 transmits control information for a closed-loop transmit antenna transmission when the downlink transmission employs the closed-loop transmit antenna transmission. When a UE in a soft handover region uses a site selection diversity transmission (SSDT) for receiving the DL_DPDCH from only one node B in a good downlink channel condition, the FBI field 314 transmits control information for supporting the SSDT. The SSDT has been developed for a novel technology named FCS, which has recently been applied in HSDPA. The TPC field 315 transmits power control commands for controlling transmission power of the downlink channels from the node B or cell. When a UE is in a soft handover region, the UL_DPCH illustrated in FIG. 3A is received by all cells in the soft handover region. For example, referring to FIG. 1, the UL_DPCH transmitted by the UE 111 is received by either cell #1 101 or cell #2 103.

The S-UL_DPCCH illustrated in FIG. 3B carries control information from a UE using the HSDPA. As described above, the UE using the HSDPA can transmit channel estimation information for selecting an optimum cell or MCS level together with ACK or NACK for a received packet to a node B or cell transmitting HSPDA. These kinds of information can be carried by the S_UL_DPCCH. In this case, only ACK/NACK 323 can be transmitted during one slot or three slots. A measurement report 325 also may be transmitted during one slot or three slots. The ACK or NACK, and measurement report are transmitted only when the UE needs to transmit them, and are generally subjected to discontinuous transmission (DTX) when they do not need to be transmitted. The use of the S_UL_DPCCH provides compatibility between an HSDPA mobile communication system and a non-HSDPA mobile communication system without modifying the UL-DPCH structure used in the conventional 3GPP communication system. The S_UL_DPCCH is a channel transmitted only to a cell transmitting the HSDPA and is transmitted only to a cell (or node B) transmitting the HSDPA even when the UE is in a soft handover region. For example, referring to FIG. 1, the UE 111 does not transmit the S UL_DPCCH to cell #2 103 but transmits it only to cell #1 101.

In transmitting and receiving the channels illustrated in FIGs. 2A to 2C, 3A, and 3B, a conventional power control method is employed tp control transmission power in a soft handover region. For example, referring to FIG. 1, after the UL_DPCH transmitted from the UE 111 is received by cell #1 101 and cell #2 103, an RNC controlling the cells 101 and 103 analyzes the power control command. Therefore, when any of cell #1 10 and cell #2 103 receives a signal with transmission power exceeding an optimum value, the corresponding cell transmits a command to the UE 111 to lower the uplink transmission power, thereby reducing generation of interference noise in a soft handover region due to the excessive transmission power from the UE. Meanwhile, since the UE 111 receives the DL_DPCH from both cell #1 101 and cell #2 103, when the transmission power of a received DL_DPCH exceeds an optimum value, the UE transmits a command to the corresponding cell or cells to lower the downlink transmission power, thereby reducing generation of interference noise in a soft handover region due to the excessive transmission power. In accordance with the uplink/downlink control commands, the UE and cells using the HSDPA transmit the HS_PDSCH and the S_UL_DPCCH, which are not transmitted to other node Bs in the soft handover region, after adjusting the channels corresponding to the change of the transmission power of the DL_DPCH and the UL_DPCH.

The conventional power control method in a soft handover region as described illustrates the following problems when it is employed to control the uplink transmission power of the UE using HSDPA.

Referring to FIG. 1, the UL_DPCH transmitted from the UE 111 is received by two cells, cell #1 101 cell #2 103, and is then analyzed in the RNC. Therefore, the UL_DPCH is transmitted usually with less transmission power as compared to when it is transmitted to only one cell. However, the S UL_DPCCH is information required only by cell #1 101 transmitting HSDPA and is not received by cell #2 103. Therefore, when the S_UL_DPCCH is transmitted with the transmission power adopted for the UL_DPCH, cell #1 101 may misinterpret the S_UL_DPCCH. When correct information of the S_UL_DPCCH is not received by cell #1 101, HARQ mechanism selection,

MCS level selection, or selection of an optimum cell in the FCS cannot be correctly carried out. Consequently, the HSDPA itself may malfunction.

It is therefore the object of the present invention to provide a method and an apparatus, which separately controls transmission powders of at least two uplink channels employed in a CDMA communication system.

This object of the-present invention is solved by the subject matter of the independent claims. Preferred embodiments are the subject matter of the dependent claims.

Accordingly, the present invention has been designed to solve the above-mentioned problems occurring in the prior art and proposes a method capable of separately controlling transmission powers of the UL_DPCH and the S_UL_DPCCH when a UE receiving HSPDA is located in a soft handover region. Further, the present invention proposes a method that enables a node B to correctly estimate the S_UL_DPCCH while maintaining the conventional power control method when a UE receiving HSPDA is located in a soft handover region.

Additionally, it is an aspect of the present invention to provide a method and an apparatus, which enable a node B to reliably interpret uplink control channels for HSDPA.

It is a further aspect of the present invention to provide a method and an apparatus, which separately control powers of uplink control channels in a mobile communication system supporting HSDPA.

It is yet another aspect of the present invention to provide a method and an apparatus, which control powers of uplink control channels when a UE receiving the downlink packet is located in a soft handover region in a mobile communication system supporting HSDPA.

It is still another aspect of the present invention to provide a method and an apparatus, which separately generate power control commands for a UL_DPCH and an S_UL_DPCH.

It is still another aspect of the present invention to provide a method and an apparatus, which measure a transmission power of each of a UL_DPCH and an S_UL_DPCH by providing a pilot field not only for the UL_DPCH, but also for the S_UL_DPCH, for the transmission power control.

It is still another aspect of the present invention to provide a method and an apparatus, which transmit uplink transmission power control commands for a UL_DPCH and an S_UL_DPCH, for the transmission power control.

It is still another aspect of the present invention to provide a method and an apparatus for transmission power control, which prevent an uplink transmission power for an S_UL_DPCH from being set too high, thereby preventing excessive interference noise from being generated in a soft handover region.

It is still another aspect of the present invention to provide a method and an apparatus, which enable a node B to separately channel-compensate for at least two uplink channels employed in a CDMA communication system by providing a pilot field for each of the channels.

It is still another aspect of the present invention to provide a method and an apparatus, which enable a node B to separately channel-compensate for at least two uplink channels employed in a mobile communication system supposing HSDPA by providing a pilot field for each of the channels.

It is still another aspect of the present invention to provide a method and un apparatus, which separately channel-compensate for uplink channels when a UE receiving the downlink packet is located in a soft handover region in a mobile communication system supporting HSDPA.

It is still another aspect of the present invention to provide a method and an apparatus, which separately channel-estimate and channel-compensate for a UL_DPCH and an S_UL_DPCH by providing a pilot field not only for the UL_DPCH, but also for the S_UL_DPCH, for the transmission power control.

In order to accomplish the above aspects, there is provided a method for uplink transmission power control in a CDMA communication system including: a first node B simultaneously providing high speed packet data through a high speed data shared channel and dedicated data through a downlink dedicated physical channel; at least one second node B located adjacent to the first node B; and a UE for controlling powers of first and second uplink dedicated control channels, when the UE is located in a soft handover region in which the second node B provides dedicated data through a downlink dedicated physical channel, the UE transmitting dedicated data through an uplink dedicated data channel and control information through the first uplink dedicated control channel to the first and second node Bs, the control information including transmission power control information and pilot bit information required in receiving the dedicated data, the UE transmitting confirmation information indicating whether the high speed packet data is received and downlink channel status information between the first node B and the UE through the second uplink dedicated control channel, the second uplink dedicated control channel having a subframe comprised of three slots, the method comprising the steps of: transmitting the subframe after assigning the pilot bit information to at least one of the three slots; receiving the transmission power control information through the downlink dedicated physical channel from the first node B, the transmission power control information corresponding to the pilot bit information; and controlling transmission power for the second uplink dedicated control channel with the transmission power control information.

In accordance with another aspect of the present invention, there is provided a method for uplink transmission power control in a CDMA communication system including: a first node B simultaneously providing high speed packet data through a high speed data shared channel and dedicated data through a downlink dedicated physical channel, the first node B controlling powers of first and second uplink dedicated control channels; at least one second node B located adjacent to the first node B; and a UE for transmitting dedicated data through an uplink dedicated data channel and control information through the first uplink dedicated control channel to the first and second node Bs when the UE is located in a soft handover region in which the second node B provides dedicated data through a downlink dedicated physical channel, the control information including transmission power control information and pilot bit information required in receiving the dedicated data, the UE transmitting confirmation information indicating whether the high speed packet data is received and downlink channel status information between the first node B and the UE through the second uplink dedicated control channel, the second uplink dedicated control channel having a subframe comprised of three slots, the method comprising the steps of: generating second transmission power control information for power control of the second uplink dedicated control channel, corresponding to the pilot bit information carried by at least one of the three slots; and transmitting the second transmission power control information through the downlink dedicated physical channel at a transmission time point for the second transmission power control information.

In accordance with another aspect of the present invention, there is provided an apparatus for uplink transmission power control in a CDMA communication system including: a first node B simultaneously providing high speed packet data through a high speed data shared channel and dedicated data through a downlink dedicated physical channel; at least one second node B located adjacent to the first node B; and a UE for controlling powers of first and second uplink dedicated control channels, when the UE is located in a soft handover region in which the second node B provides dedicated data through a downlink dedicated physical channel, the UE transmitting dedicated data through an uplink dedicated data channel and control information through the first uplink dedicated control channel to the first and second node Bs, the control information including transmission power control information and pilot bit information required in receiving the dedicated data, the UE transmitting confirmation information indicating whether the high speed packet data is received and downlink channel status information between the first node B and the UE through the second uplink dedicated control channel, the second uplink dedicated control channel having a subframe comprised of three slots, the apparatus comprising: a transmitter for transmitting the subframe after assigning the pilot hit information to at least one of the three slots; and a receiver for receiving the transmission power control information through the downlink dedicated physical channel from the first node B, the transmission power control information corresponding to the pilot bit information, and for controlling transmission power for the second uplink dedicated control channel with the transmission power control information.

In accordance with another aspect of the present invention, there is provided an apparatus for uplink transmission power control in a CDMA communication system including: a first node B simultaneously providing high speed packet data through a high speed data shared channel and dedicated data through a downlink dedicated physical channel, the first node B controlling powers of first and second uplink dedicated control channels; at least one second node B located adjacent to the first node B; and a UE transmitting dedicated data through an uplink dedicated data channel and control information through the first uplink dedicated control channel to the first and second node Bs when the UE is located in a soft handover region in which the second node B provides dedicated data through a downlink dedicated physical channel, the control information including transmission power control information and pilot bit information required in receiving the dedicated data, the UE transmitting confirmation information indicating whether the high speed packet data is received and downlink channel status information between the first node B and the UE through the second uplink dedicated control channel, the second uplink dedicated control channel having a subframe comprised of three slots, the apparatus comprising: a receiver for obtaining a second channel estimation result corresponding to the pilot bit information carried by at least one of the three slots; and a transmitter for generating second transmission power control information for power control of the second uplink dedicated control channel, and for transmitting the second transmission power control information through the downlink dedicated physical channel at a transmission time point for the second transmission power control information.

The above and other aspects, features, and advantages of the present invention will be more apparent from the following detailed description taken in conjunction with the accompanying drawings, in which:
FIG. 1 illustrates downlink/uplink channels between a UE and a plurality of cells when the UE is in a soft handover region;
FIGs. 2A to 2C illustrate structures of the downlink channels employed in u conventional CDMA communication system supporting HSDPA;
FIGs. 3A and 3B illustrate structures of the uplink channels employed in a conventional CDMA communication system supporting HSDPA;
FIG. 4 is a block diagram of a transmitter in a node B according to an embodiment of the present invention;
FIG. 5 is a block diagram of a receiver in the node B according to an embodiment of the present invention;
FIG. 6 is a block diagram of a UE transmitter corresponding to the node B receiver illustrated in FIG. 4;
FIG. 7 is a block diagram of a UE receiver corresponding to the node B transmitter illustrated in FIG. 5, which is located in a soft handover region covering two cells;
FIGs. 8A to 8D illustrate structures of uplink channels according to embodiments of the present invention;
FIG. 9 illustrates an algorithm of a node B controller according to the present invention;
FIG. 10 illustrates an algorithm of a UE controller corresponding to the node B controller illustrated in FIG. 9;
FIGs. 11B and 11C illustrate structures of other uplink channels according to other embodiments of the present invention;
FIG. 12 is a block diagram of a UE transmitter according to another embodiment of the present invention;
FIG. 13 is a block diagram of a receiver in the node B according to another embodiment of the present invention;
FIG. 14 illustrates an algorithm of a UE controller according to another embodiment of the present invention; and
FIG. 15 illustrates an algorithm of a node B controller according to another embodiment of the present invention.

Preferred embodiments of the present invention will be described herein below with reference to the accompanying drawings. Although the following description of the present invention is given as an example of an HSPDA in 3GPP, which is a standard of 3^{rd} generation asynchronous mobile communication systems, the present invention may be employed in other communication systems that simultaneously control powers of two or more uplink channels. Also, the present invention provides a method of separately controlling powers of downlink and uplink dedicated physical control channels for HSDPA while maintaining compatibility between an existing HSDPA node B/UE and an existing non-HSDPA UE/node B.

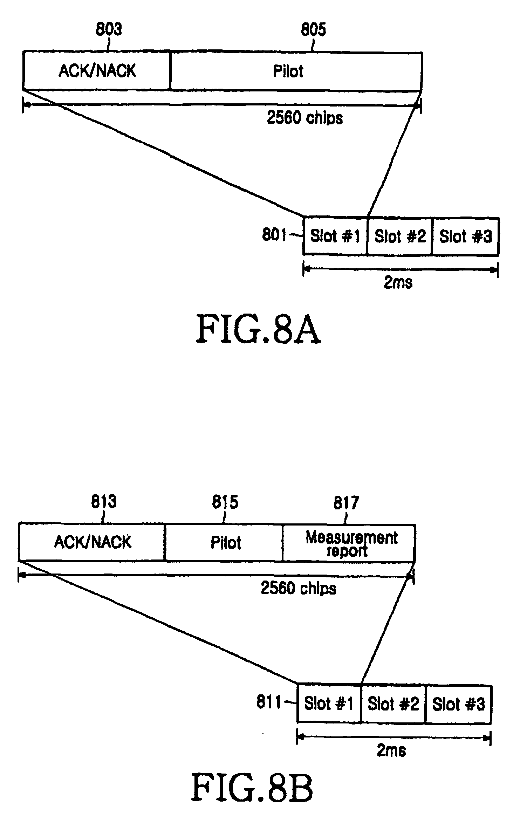

FIGs. 8A to 8D illustrate structures of S_UL_DPCCH for controlling transmission powers of a UL_DPCH and an S_UL_DPCH according to the present invention. It is assumed that the S_UL_DPCCH has a length of three slots, although the present invention may be employed when the S_UL_DPCCH has a different number of slots. In the structures illustrated in FIGs. 8A to 8D, ACK/NACK, measurement report, and the location and length of the pilot field may be changed. Further, when necessary, only the ACK/NACK, and the location and length of the pilot field may be transmitted or the ACK/NACK, measurement report, and location and length of the pilot field may all be transmitted. The ACK/NACK and measurement report may be transmitted as they are, or after being accumulated up to a predetermined length through repetition, or after being encoded through a separate encoding process.

FIG. 8A illustrates a channel structure with three slots 801 during which an ACK/NACK field 803 and a pilot field 805 are transmitted one time or repeatedly for three times. The ACK/NACK field 803 carries an acknowledgement or negative acknowledgement sent by the UE in response to an n-channel SAW packet received through the HS_PDSCH. In an acknowledgement, a cell having received the acknowledgement sends the next packet corresponding to the n-channel. In a negative acknowledgement, a cell having received the negative acknowledgement sends the previously sent packet again. The pilot field 805 is a field for estimating the channel condition and received signal intensity of the S_UL_DPCCH. The pilot pattern used in the UL_DPCCH may be reused, and the simplest pattern of all one sequence may be transmitted by a presetting between the node B and UE. Further, a pattern different from the pilot pattern in the UL_DPCCH may be transmitted. Also, a pilot field with the same pattern may be transmitted for each slot, or different pilot patterns may be used in order to configure the order of the slots. Preferably, a value preset between the node B and the UE is employed regardless of the pilot pattern to estimate the signal intensity and uplink transmission channel condition of the S_UL_DPCCH. If a value, which is not preset, is transmitted, only the intensity of the pilot signal of the S_UL_DPCCH can be measured. This may cause some deterioration in performance.

FIG. 8B illustrates a structure of an S_UL_DPCCH, which carries a time-divided measurement report 817 as well as an ACK/NACK field 813 and a pilot field 815. The ACK/NACK field 813 and the pilot field 815 have the same functions as those of the ACK/NACK field 803 and the pilot field 805 illustrated in FIG. 8A. The S_UL_DPCCH having the structure illustrated in FIG. 8B may be transmitted during one slot of the three slots or repeatedly during the three slots.

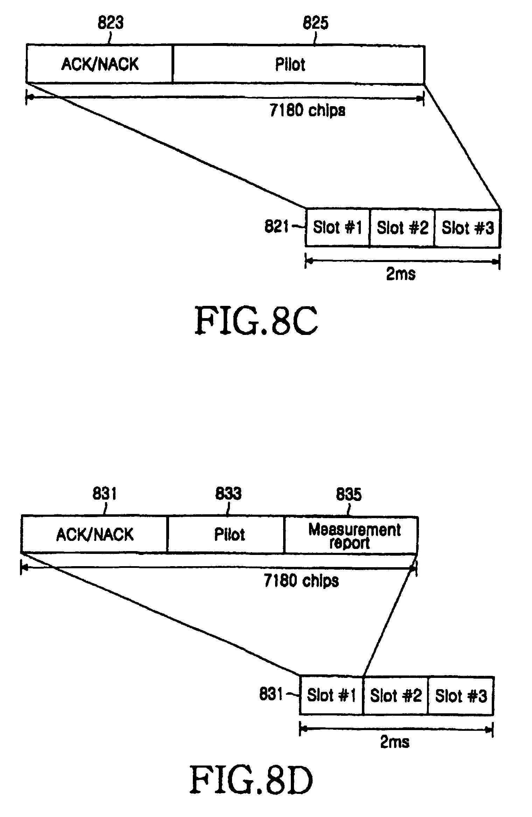

FIG. 8C illustrates a structure of an S_UL_DPCCH that carries an ACK/NACK field 823 and a pilot field 825 using all of three slots 821, and FIG. 8D illustrates a structure of an S_UL_DPCCH that carries an ACK/NACK field 831, a pilot field 833, and a measurement report 835, using all of three slots 831. Each of the fields illustrated in FIGs. 8C and 8D may have the same function and construction as those of each of the fields illustrated in FIGs. 8A and 8B.

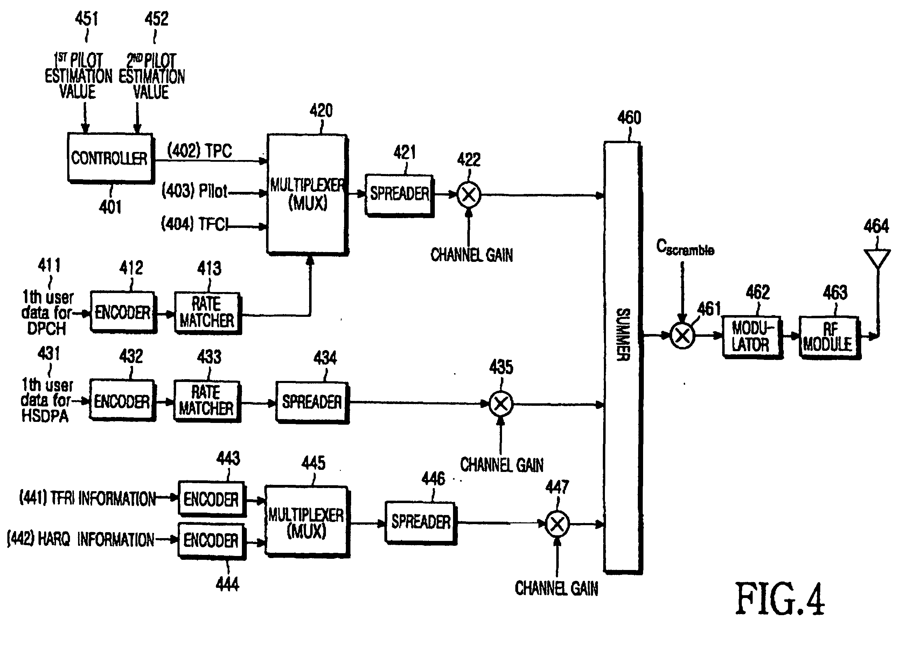

FIG. 4 is a block diagram of a transmitter in a node B according to an embodiment of the present invention. Referring to FIG. 4, a controller 401 receives a first pilot channel estimation value 451 and a second pilot channel estimation value 452, which are pilot fields of the UL_DPCCH and the S UL_DPCCH, respectively, received through a node B receiver, and generates TPC commands for the UL_DPCCH and the S_UL_DPCCH. The controller 401 inputs the TPC commands for the UL_DPCCH and the S_UL_DPCCH to a multiplexer 420 at optimum time points.

In determining the time points at which the controller 401 transmits the TPC commands for the UL_DPCCH and the S_UL_DPCCH, various items, as described below, may be considered: (1) signal intensity and degree of importance, channel condition, and data transmission rate of the UL_DPDCH transmitted from the UE; (2) signal intensity and channel condition of the S UL_DPCCH; and (3) transmission duration of the S_UL_DPCCH and power control ratio between the UL_DPCCH and the S_UL_DPCCH. For convenience of description of the present invention, it is assumed that the TPC command for the S_UL_DPCCH is transmitted one time after the TPC command for the UL_DPCCH is transmitted two times in the structures illustrated in FIGs. 4 to 7. As described above, the transmission rate for the TPC command for the UL_DPCCH and the transmission rate for the TPC command for the S_UL_DPCCH may be adjusted according to circumstances. The adjusted rates may be transmitted to the UE through a high layer signaling message or a physical channel control message, and may be changed according to a presetting between the node B and the UE.

The multiplexer 420 receives a TPC 402, a pilot 403, and a TFCI 404, to thereby construct the DL_DPCH. User data 411 or higher signaling control information is channel-encoded by convolutional coding or turbo coding in an encoder 412 and is then loaded on a signal processed by a rate matcher 413 with a format, which can be properly transmitted through the physical channel, thereby constructing the DL_DPDCH.

The DL_DPCH output from the multiplexer 420 is channel-encoded with channelization codes used in the DL_DPCH in a spreader 421 and is then multiplied by a channel gain related with the transmission power of the DL_DPCH in a multiplier 422. The channel-compensated DL_DPCH is input to a summer 460. The summer 460 sums the input DL_DPCH and other downlink transmission channels. In this case, the channel gain related with the transmission power of the DL_DPCH may be set in consideration of a transmission rate of the DL_DPCH, a TPC command received by an uplink channel, etc.

I^{th} user data for the HS_PDSCH are channel-encoded by a proper method in an encoder 432 and are then processed by a rate matcher 433 into a format, which is proper for the transmission through a physical channel. The process user data is channel-encoded in a spreader 434, multiplied by a proper channel gain in a multiplier 435, and then input to a summer 460, which sums the input data and other downlink channels. The spreader 434 may have a plurality of channelization codes as will be described later, thereby increasing the downlink data transmission speed.

TFRI information 441 indicates channelization codes used for the HS_PDSCH, an MCS level, and values matched to the HS_PDSCH, so that the UE can correctly interpret the HS_PDSCH. HARQ information 442 informs the UE of the channel on which the packet carried by the HS_PDSCH has been transmitted and whether the packet is a first-transmitted packet or a retransmitted packet, thereby allowing the UE to understand and properly utilize the characteristic of the packet carried by the currently received HS_PDSCH. That is, when the received packet is a retransmitted packet, the retransmitted packet may be added to the already-received erroneous packet, thereby reproducing a proper signal.

The TFRI information 441 and HARQ information 442 are encoded by encoders 443 and 444, respectively, and are then input to a multiplexer 445. The TFRI information 441 and HARQ information 442 may be transmitted as they are, or transmitted repeatedly or after being encoded through a separate encoding process in order to increase the reliability. The multiplexer 445 receives the outputs of the encoders 443 and 444, thereby constructing and outputting an HS-SCCH. The signal output from the multiplexer 445 is spread with a channelization code for the HS-SCCH in a spreader 446, multiplied by a channel gain for the HS-SCCH in a multiplier 447, and then input to a summer 460.

The summer 460 sums the DL_DPCH, HS-PDSCH, HS-SCCH, and downlink shared channels transmitting channels of other UEs and control signals of node Bs not illustrated in FIG. 4. A UE receiving the downlink shared channels can properly interpret only the signals received through desired downlink channels by means of the channelization codes multiplied to the downlink shared channels for differentiation. The signals output from the summer 460 are scrambled with a scrambling code used by the node B in a multiplier 461 and are then modulated in a modulator 462. The modulated signals are converted to carrier frequency signals in an RF module 463 and are then transmitted to the UE via an antenna 464. The scrambling code employed in the multiplier 461 is useful in identifying each of downlink signals from node Bs or cells.

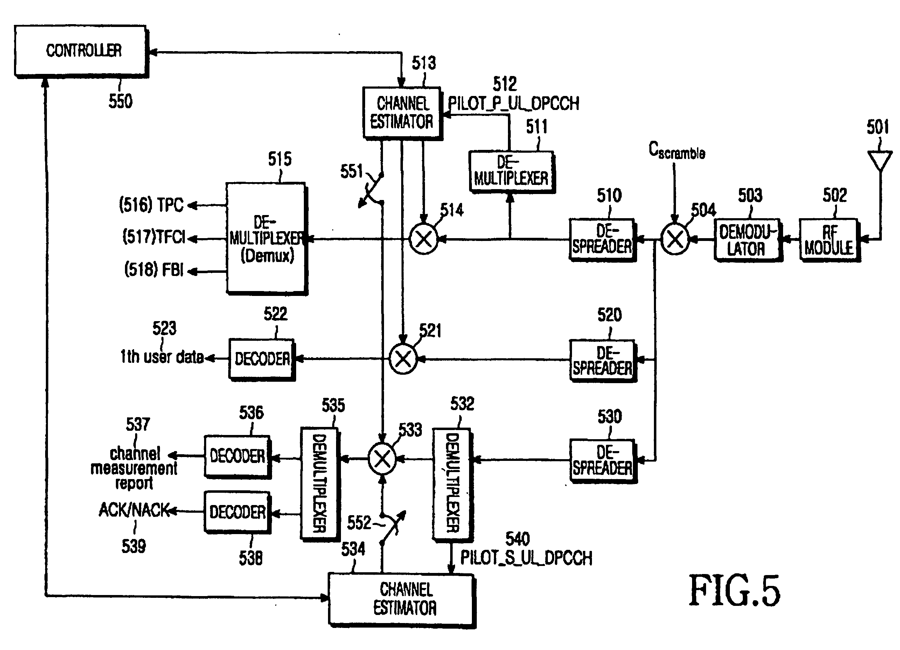

FIG. 5 is a block diagram of a receiver in the node B according to an embodiment of the present invention. Signals received through an antenna 501 from a UE are converted to baseband signals in an RF module 502. The baseband signals are demodulated in a demodulator 503 and then descrambled with the same scrambling codes as used by the UE in a multiplier 504. The scrambling codes used by the UE identify the signals transmitted to UEs from a node B. The signals output from the multiplier 504 are despread in despreaders 510, 520, and 530, so that the signals are classified into a UL_DPCCH, a UL_DPDCH, and an S_UL_DPCCH. The same channelization codes as used in the UL_DPCCH, UL_DPDCH, and S_UL_DPCCH are applied to the despreaders 510, 520, and 530, respectively. From the UL_DPCCH output from the despreader 510, only a pilot field 512 is extracted in the demultiplexer 51 and is then input to a channel estimator 513. The pilot field 512 is used in estimating an uplink channel condition. After the intensity of the pilot signal is estimated, the node B generates a TPC command for transmission power control of the UL_DPCH using the intensity of the pilot signal. The UL_DPCH input to the multiplier 514 is compensated with a channel estimation value calculated in the channel estimator 513 and is then demultiplexed into TPC 516, TFCI 517, and FBI 518 in the demultiplexer 515.

The UL_DPDCH output from the despreader 520 is compensated with the channel estimation value of the channel estimator 513 in the multiplier 521 and is then restored to the i^{th} user data or higher layer signaling message in a decoder 522, which is assumed to be capable of performing an inverse rate matching function also.

From the S-UL_DPCCH output from the despreader 530, only a pilot field 540 is extracted in the demultiplexer 532. The pilot field 540 extracted from the S-UL_DPCCH is channel-estimated in a channel estimator 534, and then the estimated value is transmitted to a controller 550.

The S-UL_DPCCH channel-compensated in the multiplier 533 is divided into ACK/NACK and channel report information in a demultiplexer 535, which are then restored to channel measurement information 537 and ACK/NACK in decoders 536 and 538, respectively. The decoders 536 and 538 are defined as decoders having the same codes and decoding function for repetitive transmission as used by the UE.

The controller 550 receives a signal estimation value of the pilot field of the UL-DPCCH estimated in the channel estimator 513 and a channel estimation value of the pilot field of the S-UL-DPCCH estimated in the channel estimator 534 to generate TPC commands for each of the channels. Switches 551 and 552 connected to the channel estimators 513 and 534, respectively, can be controlled to adjust the channel estimation value input to the multiplier 533, thereby enabling a separate channel estimation for each of the channels to which the TPC is applied. That is, when a signal to which the TPC for the UL_DPCCH is applied is received, the channel estimation value of the S-UL_DPCCH can be compensated with a channel estimation value estimated with the pilot field of the UL_DPCCH. In contrast, when a signal to which the TPC for the S-UL_DPCCH is applied is received, the channel estimation value of the S-UL_DPCCH can be compensated with a channel estimation value estimated with the pilot field of the S-UL_DPCCH. In the controller 550 described above, channels having different channel measurement data, which are transmitted only to one UE, can be separately estimated and then compensated with the estimated value, thereby improving the channel compensation gain. Further, during the transmission of the S-UL_DPCCH, the node B may separately measure and channel-compensate the S-UL_DPCCH, thereby further improving performance of the S-UL_DPCCH.

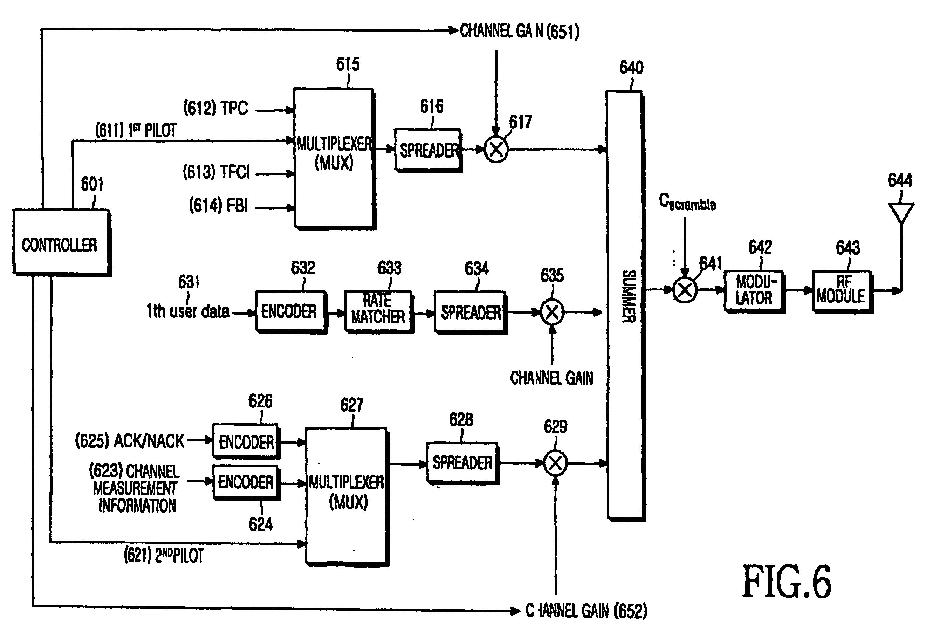

FIG. 6 is a block diagram of a UE transmitter corresponding to the node B receiver illustrated in FIG. 4. A controller 601 generates and controls a channel gain 651 applied to the UL-DPCH, a first pilot 611 applied to the UL-DPCCH, a channel gain 652 applied to the S-UL-DPCCH, and a second pilot 621 applied to the S-UL-DPCCH. The controller 601 receives a plurality of TPCs transmitted from a node B and generates channel gains 652 and 651 using the TPCs for the S-UL-DPCCH and UL-DPCH, respectively. The channel gain 652 can be directly determined using the TPC received by the node B transmitting the HSDPA, or may be determined as a specific critical value when the channel gain to which the received TPC is applied is too high so that the quantity of the interference signal for other signals in a soft handover region generated by the S-UL-DPCCH is thus too large. The specific critical value may be determined with a ratio of the transmission power to the UL-DPCH or an absolute magnitude of the transmission power. The ratio of the transmission power to the UL-DPCH and the absolute magnitude of the transmission power may be transmitted with the higher layer signaling or physical layer signal from the node B to the UE, or may be preset between the node B and the UE.

The multiplexer 615 receives a TPC 612 for downlink transmission power control, a first pilot 611 output from the controller 601, a TFCI 613, and un FBI 614, to construct the UL-DPCCH. The UL-DPCCH output from the multiplexer 615 is spread with a channelization code applied to the UL-DPCCH in the spreader 616, is multiplied by the channel gain 651 in the multiplier 617, and is then input to a summer 640.

The user data 631 or higher layer signaling information is encoded in an encoder 632 and is then processed to be suitable for the transmission mode of physical channels in a rate matcher 633. The signal output from the rate matcher 633 is converted to the UL_DPDCH in a spreader 634, multiplied by a channel gain for the UL_DPDCH in a multiplier 635, and then input to the summer 640. The channel gain applied in the multiplier 635 can be determined in consideration of the difference between transmission rates of the UL_DPCCH and the UL_DPDCH for the channel gain applied in the multiplier 617.

A multiplexer 627 receives encoded values that are obtained by encoding an ACK/NACK 625, which is control information for n-channel HARQ, in an encoder 626, and by encoding channel measurement information 623 in an encoder 624, respectively. Further, the multiplexer 627 receives the second pilot 621 determined in the controller 601 to construct an S-UI-DPCCH. As described above, the second pilot 621 may employ a pattern equal to or different from that of the first pilot 611.

The summer 640 sums input uplink signals and outputs the sum to a multiplier 641. Since the uplink signals summed in the summer 640 can be identified by the different channelization codes multiplied to the uplink signals, the node B receiving the signals can reproduce proper signals. The multiplier 641 scrambles the uplink signals from the UE with uplink scrambling codes used by the UE, so that the uplink signals from the UE can be differentiated from uplink signals from other UEs. The signals output from the multiplier 641 are modulated in a modulator 642, converted to carrier frequency signals in an RF module 643, and then transmitted to the node B via an antenna 644.

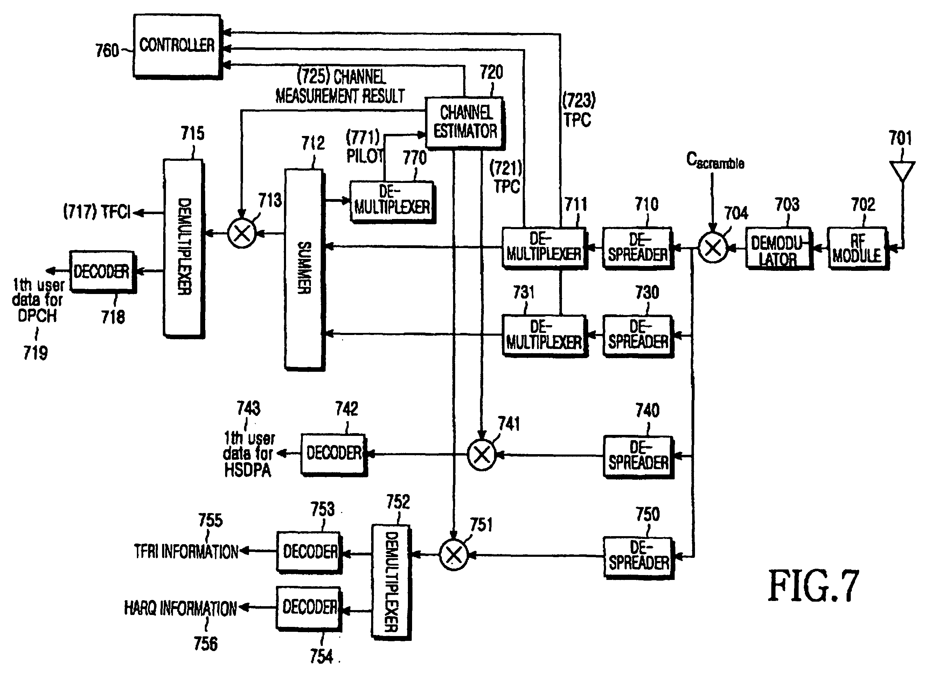

FIG. 7 is a block diagram of a UE receiver corresponding to the node B transmitter illustrated in FIG. 5, which is located in a soft handover region covering two cells. Downlink signals received through an antenna 701 are converted to baseband signals in an RF module 702. The baseband signals are demodulated in a demodulator 703 and then descrambled with the same scrambling codes as those used by the UE in a multiplier 704. The descrambled downlink signals output from the multiplier 704 are despread in despreaders 710, 730, 740, and 750, so that the signals are classified into a DL_DPCH, a DL_DPCH from other node Bs not transmitting the HS-DSCH, an HS_PDCH, and an SHCCH.

The DL_DPCCH from a node B transmitting the HS-DSCH, which is output from the despreader 710, is input to a demultiplexer 711, in which a TPC 721 is then extracted from the DL_DPCH. The DL_DPCH from a node B not transmitting the HS-DSCH, which is output from the despreader 730, is input to a demultiplexer 731, in which a TPC 723 is then extracted from the DL_DPCH. The TPCs 721 and 723 are input to a controller 760 and then used in determining uplink powers of the UP_DPCH and S-UL-DPCCH.

Outputs of the demultiplexers 711 and 731 are input to and summed in a summer 712. The summed signals are input to a demultiplexer 770, in which only a pilot field 771 is extracted from the summed signals and is then input to a channel estimator 720. A channel estimation result for the pilot signals 771 input to a channel estimator 720 is input to a controller 760 and is then used in generating a TPC command for downlink transmission power control of node Bs in communication with the UE. The channel estimation result of the channel estimator 720 is input to a multiplier 713 and used in channel compensation of the DL_DPCH output from the summer 712. The channel-compensated DL_DPCH is input to and demultiplexed into a TFCI 717 and a DL_DPDCH in a demultiplexer 715. The DL_DPDCH output from the demultiplexer 715 is decoded and thus restored to user data 719 or higher layer signaling information in a decoder 718, which is assumed to be capable of performing an inverse rate matching function also.

The HS_PDSCH output from- the despreader 740 is input to the multiplier 741, compensated with a channel estimation value calculated in the channel estimator 720, and then output to a decoder 742. In FIG. 7, it is assumed that the channel estimation by the channel estimator 720 is performed after the DP_DPCHs to the UE are summed. However, if channel estimation is carried out for each pilot signal differentiated from the DL_DPCHs, the channel estimation value applied to the multiplier 741 can be replaced by a channel estimation value for a pilot field of a DL_DPCH from a node B having transmitted the HS-PDSCH. The HS-DSCH output from the multiplier 741 is decoded and deinterleaved in a demultiplexer 742 to be restored to the user data. The HS-DSCH decoded in the demultiplexer 742 may be used in the operation of an N-channel SAW HARQ.

The SHCCH output from the despreader 750 is compensated with the channel estimation value output from the channel estimator 720 in the multiplier 751. As the channel estimation value used in the multiplier 741, the channel estimation value used in the multiplier 751 may also be replaced by a value obtained by interpreting a pilot field of a DL_DPCH of a node B transmitting the SHCCH, if the pilot signals of the DL_DPCHs can be differentiated.

The SHCCH having been channel-compensated in the multiplier 751 is divided into two signals in a demultiplexer 752, which are then restored to TFRI information 755 and HARQ information 756 in decoders 753 and 754, respectively, so that they can be used for corresponding objects.

The controller 760 receives estimation results of pilot fields of all the TPCs and DL_DPCCHs of received by the UE to determine uplink transmission powers of the UL-DPCH and S-DL-DPCCH of the UE. If a node B transmitting the HSDPA has transmitted a TPC command for the UL-DPCCH to a UE using the receiver illustrated in FIG. 7, the transmission power of the UL-DPCH including the TPC command can be determined. When the S-UL-DPCCH must be transmitted without receiving the TPC command for the S-UL-DPCCH after receiving the TPC command for the UL-DPCCH, the transmission power for the S-UL-DPCCH may be determined with a predetermined power offset. Further, if a node B transmitting the HSDPA has transmitted a TPC command for the S-UL-DPCCH, the transmission power of the UL-DPCH can he determined by using other TPC commands than the TPC command for the S-UL-DPCH, and the transmission power of the S-UL-DPCH can be determined by using the TPC command for the S-UL-DPCH.

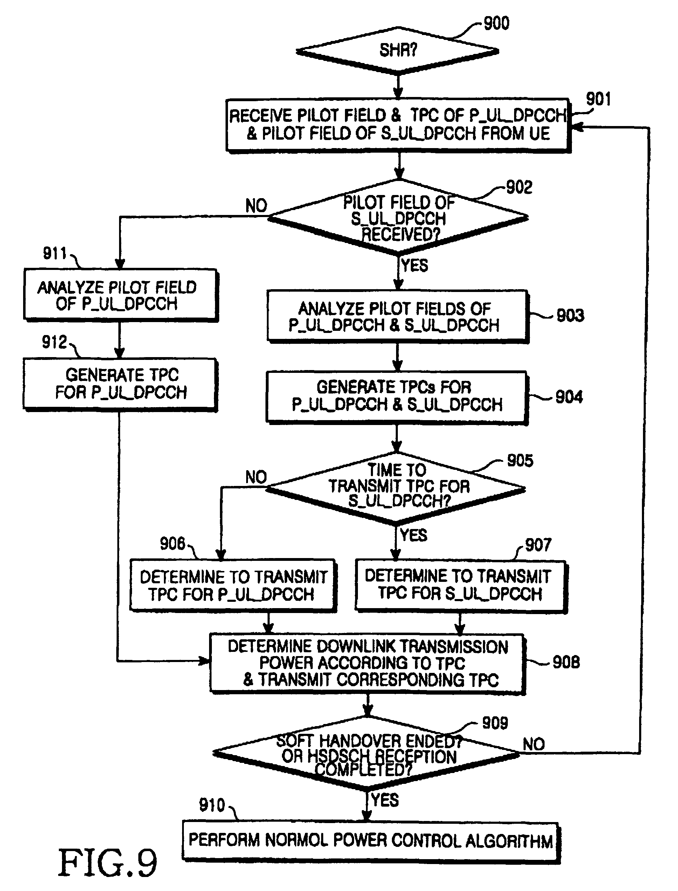

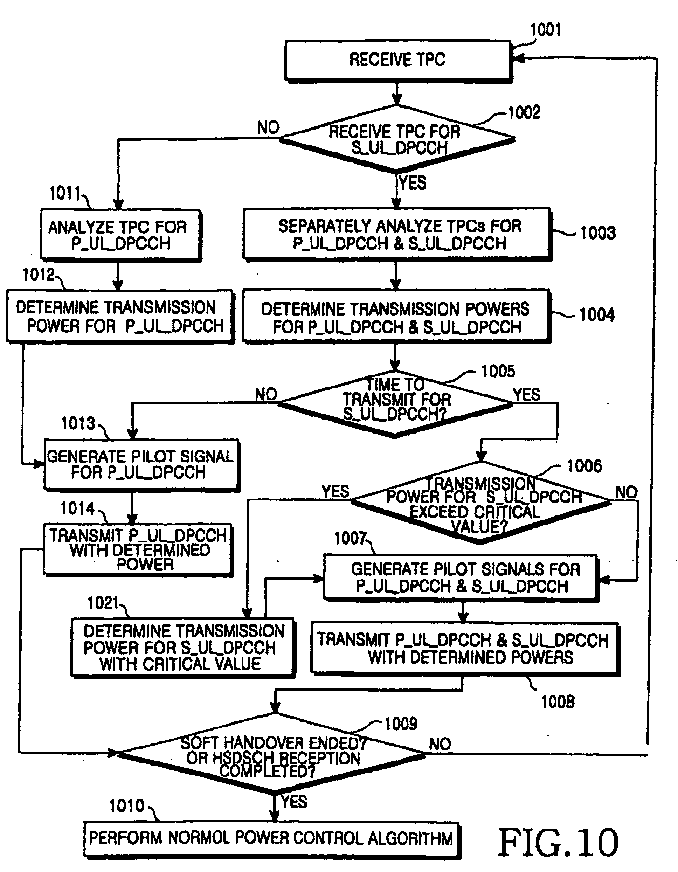

FIGs. 9 and 10 are flowcharts showing operations of a node B controller and a UE controller in an uplink power control method according to the present invention. For convenience, the description below will be given on the basis of the situation illustrated in FIG. 1.

FIG. 9 illustrates an algorithm of a node B controller according to the present invention. Referring to FIG. 9, in step 900, the node B determines whether a UE receiving an HS-DSCH from the node B is located in a soft handover region (SHR). It is natural that the node B does the determining in step 900, because the node B receives information about intensities of signals from other node Bs measured by the UE and determines whether to permit the UE to communicate with other node Bs in the soft handover region or not. In step 901, the node B receives a pilot field and TPC command of the P_UL-DPCCH, and a pilot field of the S-UL-DPCCH from the UE. The P_UL-DPCCH carries control information for downlink dedicated channels, and the S-UL-DPCCH carries uplink control information for the HSPDA. When the node B rcceives the S-UL_DPCCH in step 901, the S-UL_DPCCH may have different structures according to whether the UE is located in the soft handover region or not. That is, when the UE is not located in the soft handover region, the UE is in communication with only one node B, which transmits the HS-DSCCH, so that the UE need not send pilot information to the S-UL-DPCCH for transmission power control of the S-UL-DPCCH. Therefore, when the UE is not located in the soft handover region, the S-UL-DPCCH may have a format without a pilot field from among the various formats illustrated in FIGs. 8A and 8D. However, in the description of FIG. 9, it is assumed that the UE always uses slots with the same format for the S-UL-DPCCH. By the UE always using slots with the same format, excessive signaling for changing the slot format of the S-UL-DPCCH between the UE and the node B transmitting B can be eliminated. However, when the UE is not located in the soft handover region, the UE may transmit unnecessary signals, which increases consumption of buttery power. In order to prevent the increase in the consumption of battery power, the UE may set a DTX (Discrete Transmission OFF) mode instead of transmitting the pilot fields of the S-UL-DPCCH.

In step 902, the node B determines whether it has received an exact pilot field of the S-UL-DPCCH. When the node B has concluded that an exact pilot field of the S-UL-DPCCH has not been received, the node B analyzes the pilot field of the P_UL_DPCCH to generate a TPC command for the P_UL_DPCCH in step 911. When the node B has confirmed a reception of an exact pilot field of the S-UL-DPCCH in step 902, the node B analyzes the pilot fields of the P_UL_DPCCH and the S_UL_DPCCH in step 903. In step 904, TPC commands for the P_UL_DPCCH and the S_UL_DPCCH are generated using the pilot fields of the P_UL_DPCCH and the S_UL_DPCCH obtained from the analysis in step 903.

In step 905, the node B determines whether it is a suitable point of time to transmit the TPC for the S_UL_DPCCH. The transmission time points may he determined in consideration of the such items as a degree of importance of data transmitted through the UL-DPDCH, a power control period for the UL-DPCH according to the moving speed of the UE, a reception quality of the P UL-DPCH, and a reception quality of the S_UL-DPCH. When data transmitted through the UL-DPDCH are not so important, the TPC for the S-UL-DPDCH may be transmitted more frequently, in order to receive exact uplink control information for the HSDSCH. When the power control period for the UL-DPCH may be prolonged according to the moving speed of the UE, the TPC for the S-UL-DPCCH may be more frequently transmitted. When the quality of the received P-UL-DPCH is good and there is no series change in the channel condition from the UE to the node B, the TPC for the S-UL-DPCCH may be more frequently transmitted. Finally, when there is no series change in either the channel condition or the quality of the S-UL-DPCCH, the TPC for the S-UL-DPCCH may be more frequently transmitted.

When the UE is located in the soft handover region, the UL-DPCH and S_UL-DPCH have different transmission powers. Further, since all the node Bs in the soft handover region can receive the UL-DPCH of the UE due to the UL-DPCH located in the soft handover region, even a UL-DPCH and an S-UL-DPCH transmitted to the same UE may have different signal quality and channel condition.

If the node B has concluded that it is not a point of time to transmit the TPC for the S_UL_DPCCH in step 905, the node B determines to transmit a TPC command for the P_UL_DPCCH in step 906. When the node B has concluded that it is a point of time to transmit the TPC for the S_UL_DPCCH, the node B transmits a TPC command for the S_UL_DPCCH in step 907. Although the TPCs determined in steps 906 and 907 are for the UL_DPCCH, they may be applied to the UL_DPDCH also, since the UL_DPCCH and the UL_DPDCH are the same in all aspects except for their transmission speeds.

In step 908, the node B sets the downlink transmission power according to the downlink power control command received in step 901 and then transmits other downlink signals along with corresponding TPC commands to the UE.

In step 909, the node B determines whether the UE in communication with the node B has escaped from the soft handover region or whether transmission of the HS-DSCH to the UE has been completed. When the UE has escaped from the soft handover region or the transmission of the HS-DSCH to the UE has been completed, the uplink transmission power of the UE is controlled with a normal power control algorithm controlling the uplink transmission power of the UE in step 910. In the contrary case, the procedure will be repeated from step 901.

The above description of the algorithm of a node B controller illustrated in FIG. 9 is based on an assumption that the node B determines whether it will perform the operations in steps 901 to 908, according to whether the UE is located in the soft handover region. That is, when the UE is located in the soft handover region, the UE should transmit the pilot field to S_UL_DPCCH for each S_UL_DPCCH subframe with 2 ms unit duration, enabling the node B to always perform the operations in steps 901 to 908. This frequent transmission of the pilot field may increase interference of the UE with node Bs, which do not transmit the HS-DSCH.

Therefore, as another example for reducing the interference, the present invention enables an HSDPA node B to receive exact ACK/NACK information and channel report messages only when it is scheduled to receive HS-DSCH data. Therefore, the node B transmits the pilot field through the S_UL_DPCCH, and, in response, the HSDPA node B performs the operations illustrated in FIG. 9, so that the HSDPA node B can separately control the transmission powers of the S UL_DPCCH and the P_UL_DPCCH.

Specifically, when the UE is located in a soft handover region, the HSDPA node B performs scheduling that enables the HS-DSCH data to be transmitted to the UE, and transmits control information required to receive the HS-DSCH data through the SHCCH. The UE transmits pilot fields through the S _UL_DPCCH by operating as illustrated in FIG. 10, after receiving the SHCCH and until transmitting the ACK/NACK information for the HS-DSCH data. Meanwhile, the HSDPA node B separately controls the transmission powers of the S_UL_DPCCH and the P_UL_DPCCH by operating as illustrated in FIG. 9, while the UE transmits the S_UL_DPCCH pilot fields.

When the UE is located in the soft handover region, whether to transmit the S_UL_DPCCH pilot field is determined according to whether the SHCCH control information (that is, HS-DSCH data) has been received. When the S_UL_DPCCH pilot fields need not be transmitted, an S_UL_DPCCH without a pilot field may be employed from among the S_UL_DPCCHs with various structures illustrated in FIGs. 8A to 8D in the same manner as described above. Otherwise, when the UE is located in the soft handover region, the DTX transmission may be employed when the S_UL_DPCCH is transmitted always with the pilot field format and without a real S_UL_DPCCH pilot, as described above.

FIG. 10 illustrates an algorithm of a UE controller corresponding to the node B controller illustrated in FIG. 9. Referring to FIG. 10, the UE receives a TPC command from a node B in step 1001. In step 1002, the UE controller determines whether the TPC command received in step 1001 is a TPC for the S_UL_DPCCH. When the received TPC is a TPC for the S_UL_DPCCH, the S_UL_DPCCH is separated and separately analyzed from TPCs for the P _UL_DPCCH received from other node Bs in step 1003. In step 1004, transmission powers for the S_UL_DPCCH and the P_UL_DPCCH are determined using the TPCs separately analyzed in step 1003. The transmission power for the S_UL_DPCCH may be determined to have a relatively small value when the TPC for the S_UL_DPCCH is frequently transmitted. In contrast, when the TPC for the S_UL_DPCCH is transmitted with a long transmission period, the transmission power for the S_UL_DPCCH may be determined to have a relatively large value. As a simple example, the UE receiving the TPC may adjust the transmission power for the S_UL_DPCCH with power adjustment intervals of about I dB when the TPC for the S_UL_DPCCH is transmitted 1000 times per each second, and the UE receiving the TPC may adjust the transmission power for the S_UL_DPCCH with power adjustment intervals of about 2 dB when the TPC for the S_UL_DPCCH is transmitted 500 times per each second.

In step 1005, the UE controller determines whether it is a time point to transmit the S_UL_DPCCH. Step 1005 is necessary because uplink control information for the HSDPA may be transmitted using one slot in the S_UL_DPCCH having the slot structure illustrated in FIGs. 8A and 8B. However, step 1005 is unnecessary when the S_UL_DPCCHs are transmitted in the same format for each slot or transmitted for the entire duration.

In step 1005, when it is a time point to transmit the S_UL_DPCCH, the UE controller determines, in step 1006, whether the transmission power for the S_UL_DPCCH from step 1004 exceeds a critical value or not. The critical value employed in step 1006 prevents the determined transmission power for the S_UL_DPCCH, to which the TPC transmitted from the node B is applied, from being excessively large, thereby preventing the transmission power from causing excessive interference with other UEs located in the soft handover region.

When it is concluded in step 1006 that the transmission power for the S _UL_DPCCH has exceeded the critical value, the transmission power for the S_UL_DPCCH is determined using the critical value in step 1021. The critical value can be applied not only to the S_UL_DPCCH as described above but also to a sum of transmission powers of all uplink channels of the S_UL_DPCCH, UL_DPCCH, and UL_DPDCH. In other words, when the sum of the transmission powers of all uplink channels exceeds a critical value, the transmission powers of the channels are lowered below the critical value by the same proportion for each channel. Usually, information transmitted through the S_UL_DPCCH for the HSDPA service is considerably important information. Therefore, when the sum of the transmission powers of the uplink channels exceeds a critical value, the transmission powers of the channels are lowered by different proportions for the S_UL_DPCCH, UL_DPCCH, and UL_DPDCH. That is to say, the transmission powers for the UL_DPCCH and UL_DPDCH may be lowered more than the transmission power for the S_UL_DPCCH, enabling the node B to securely and reliably receive the S_UL_DPCCH. In step 1007, pilot signals for the S_UL_DPCCH and the P_UL_DPCCH are generated. In step 1008, the P_UL_DPCCH and corresponding UL_DPDCH are transmitted with the transmission powers determined in step 1004, and the S_UL_DPCCH is transmitted with the transmission power determined in step 1004.

In step 1002, if the TPC for the S_UL_DPCCH is not received, a TPC for the P_UL_DPCCH is analyzed in step 1011, and the transmission power for the P_UL_DPCCH is determined in step 1012. Step 1013 follows step 1012 and may follow step 1005 when it is concluded from the judgment in step 1005 that it is not the time point to transmit the S_UL_DPCCH. In step 1013, a pilot signal for the P_UL_DPCCH is generated. In step 1014, the P_UL_DPCCH and corresponding UL_DPDCH are transmitted with the transmission power determined in step 1012 or 1004.

In step 1009, it is determined whether the UE has escaped from the soft handover region or not and whether or not there is any more HS-DSCH to be received even if the UE is located in the soft handover region. When the UE has escaped from the soft handover region or there is no more HS-DSCH to be received, a normal power control algorithm for the downlink and uplink dedicated physical channels is performed in step 1010. When the soft handover has not been completed or there is another HS-DSCH in the soft handover region, the procedure will be repeated from step 1001.

The second embodiment of the present invention presents a method of performing channel estimation for uplink dedicated physical channels for HSDPA by transmitting separate pilots through the uplink dedicated physical channels so that node Bs receive correct uplink dedicated physical channels when a UE is locuted in a soft handover region. It is assumed that a common control method is used in the power control for the UL_DPCCH without a separate power control for the S_UL_DPCCH. Although a separate pilot may be transmitted for the S_UL_DPCCH even when the UE is not located in the soft handover region, the following description will be based on an assumption that a separate pilot is transmitted for the S_UL_DPCCH only when the UE is located in the soft handover region, for convenience of description.

When the UE is located in the soft handover region, the separate pilot for the channel estimation of the S_UL_DPCCH may have such structures as illustrated in FIGs. 8A to 8D. When the UE is not located in the soft handover region, the pilot may have a structure as that of the S_UL_DPCCH illustrated in FIG. 3B. Usually, the node B performs channel estimation with a separate pilot transmitted through the S_UL_DPCCH and channel compensation for ACK or NACK, and CQI (channel quality indicator) information in the three slots, which are subframes of the S_UL_DPCCH. According to the present invention, the node B may perform the channel compensation in a usual way using the separate pilot of the S_UL_DPCCH or in a modified way as will be described below. Further, the separate pilot should be transmitted only when one of the ACK/NACK and CQI information is transmitted, because the separate pilot is arranged for the channel compensation of the ACK/NACK or CQI information.

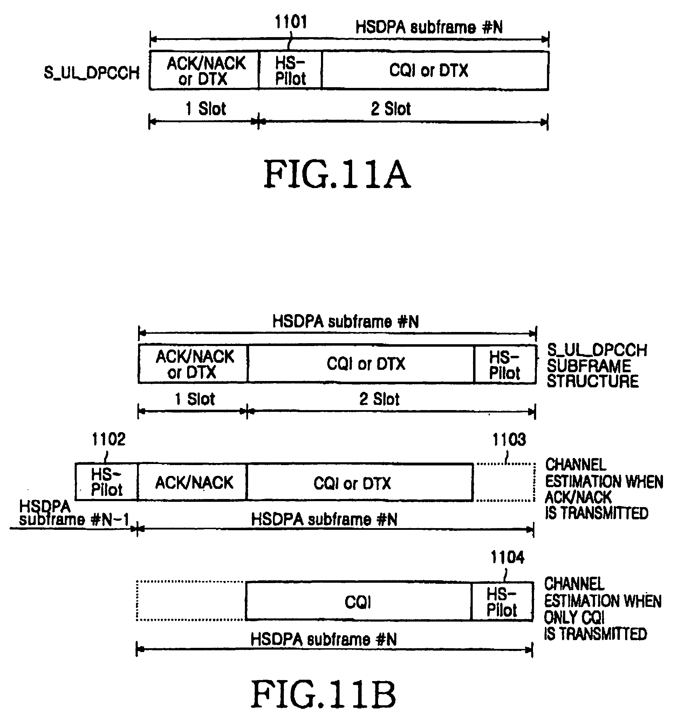

FIGs. 11A to 11C are detailed views for describing a method for channel estimation of an S_UL_DPCCH according to locations of the pilot. First, FIG. 11A illustrates the structure of the S_UL_DPCCH when a separate pilot is located between the ACK/NACK and CQI information in the S_UL_DPCCH subframe. The transmission powers for the separate pilot, ACK/NACK, and CQI information may be set to have different values. In general, the values of the transmission powers for the above information are determined by proportions between the transmission powers of the above information and the UL_DPCCH, When the node B receives an S_UL_DPCCH with a structure as illustrated in FIG. 1A, the node B first performs channel estimation by receiving an HS-Pilot 1101, which is a separate pilot, and then performs channel compensation for the ACK/NACK or CQI by using the HS-Pilot 1101. FIG. 11A illustrates a usual method in which the channel compensation is performed in one subframe. In this case, because the node B can perform the channel compensation for the ACK/NACK only after receiving the HS-Pilot 1101, time delay may be caused until the ACK/NACK information is extracted. This time delay for the extraction of the ACK/NACK may become an important factor in the reduction of the scheduling time for the next HSDPA packet to be transmitted to the UE by the node B.

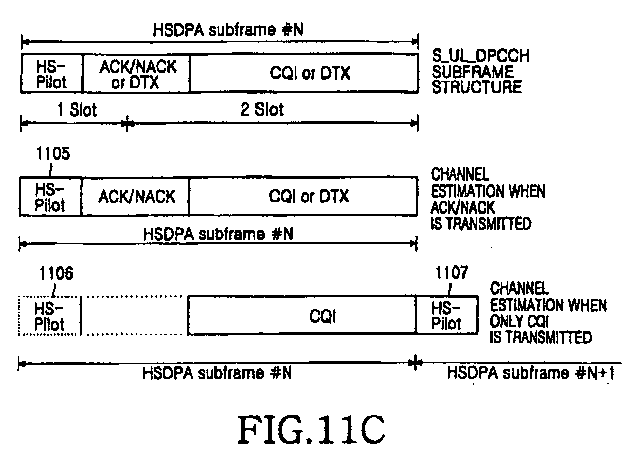

FIGs. 11B and 11C illustrate structures of other S_UL_DPCCHs for minimizing the channel compensation time delay for the ACK/NACK. In the first S_UL_DPCCH subframe of FIG. 11B, the HS-Pilot is transmitted last among the information in the first subframe. In the second subframe of FIG. 11B, which is a subframe N of the S_UL_DPCCH, only the ACK/NACK information or both the ACK/NACK and CQI information are transmitted by the UE. In the second frame, the UE transmits an HS-Pilot 1102 of a subframe N-1 instead of the pilot of the subframe N, for channel compensation for the ACK/NACK. In this case, because the node B can perform the channel compensation directly after performing the channel estimation with the received HS-Pilot 1102, there is no problem due to the time delay as is in the first frame. If the UE is located in the soft handover region from the S_UL_DPCCH subframe N, the subframe N-1 has no structure capable of transmitting the HS-Pilot 1102, so that it may impossible for the UE to transmit the HS-Pilot 1102 in the subframe N-1. In this case, the node B performs the channel compensation using an HS-Pilot 1103 after receiving an ACK/NACK of the subframe N. The third or last subframe has a structure in which the UE transmits only a CQI information in the subframe N of the S_UL_DPCCH. Even if there is a time delay for the ACK/NACK when the node B extracts the CQI information, there is no influence on the HSDPA packet scheduling. Therefore, the UE may transmit an HS-Pilot 1104 and CQI of the subframe N, so that the node B can perform the channel estimation and compensation with HS-Pilot 1104 after receiving the CQI information.

The first subframe in FIG. 11C has a structure in which an HS-Pilot is transmitted first among the information of the subframe of the S_UL_DPCCH. The second S_UL_DPCCH subframe in FIG. 11C has a structure in which the DE transmits only the ACK/NACK information or both the ACK/NACK and CQI information in a subframe N of the S_UL_DPCCH. This structure is the same as the first structure in FIG. 11C. In this case, the node B performs channel estimation by receiving an HS-Pilot 1105 and channel compensation by receiving only ACK/NACK information or both ACK/NACK and CQI information. The third S_UL_DPCCH subframe in FIG. 11C has a structure in which the UE transmits only CQI information in the subframe N of the S UL_DPCCH. In a general transmission, the HS-Pilot 1106 and CQI information of the S_UL_DPCCH subframe N are transmitted. In order to avoid discontinuous transmission by the UE, an HS-Pilot 1107 of a subframe N+I and the CQI information may be transmitted.

Of course, in the structures illustrated in FIGs. 11B and 11C also, the UE can transmit the ACK/NACK or CQI together with the HS-Pilot of the subframe N. In this case, the node B will perform the usual channel estimation and compensation as illustrated in FIG. I 1A.

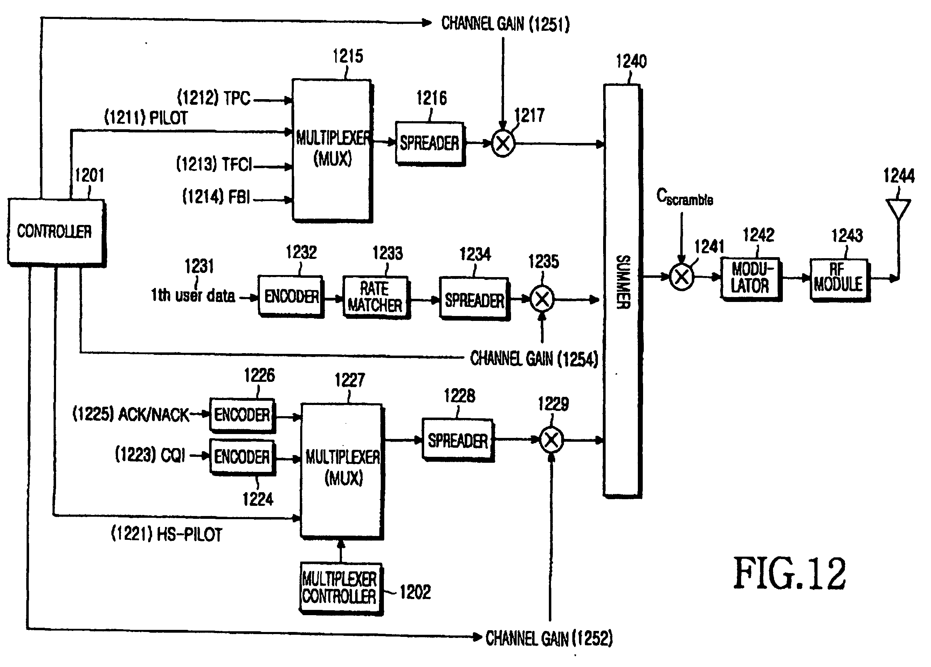

FIG. 12 is a block diagram of a UE transmitter according to a second embodiment of the present invention. Referring to FIG. 12, a controller 1201 generates and controls a channel gain 1251 applied to the UL-DPCH, a first pilot 1211 applied to the UL-DPCCH, a channel gain 1252 applied to the S-UL-DPCCH, and a second pilot 1221 applied to the S-UL-DPCCH. The controller 1201 receives a plurality of TPCs transmitted from a node B and generates channel gains 1252 and 1251 using the TPCs.

The multiplexer 1215 receives a TPC 1212 for downlink transmission power control, a first pilot 1211 output from the controller 1201, a TFCI 1213, and an FBI 1214, to construct the UL-DPCCH. The UL-DPCCH output from the multiplexer 1215 is spread with a channelization code applied to the UL-DPCCH in the spreader 1216, is multiplied by the channel gain 1251 in the multiplier 1217, and is then input to a summer 1240.

The user data 1231 or higher layer signaling information is encoded with a proper code in an encoder 1232 and is then processed to be suitable for the transmission mode of physical channels in a rate matcher 1233. The signal output from the rate matcher 1233 is converted to the UL_DPDCH in a spreader 1234, multiplied by a channel gain for the UL_DPDCH in a multiplier 1235, and then input to the summer 1240. The channel gain applied in the multiplier 1235 can be determined in consideration of the difference between transmission rates of the UL_DPCCH and the UL_DPDCH for the channel gain applied in the multiplier 1217.

A multiplexer 1227 receives encoded values which are obtained by encoding an ACK/NACK 1225, which is control information for n-channel HARQ, in an encoder 1226, and by encoding channel measurement information 1223 in an encoder 1224, respectively. Further, the multiplexer 1227 receives the second pilot 1221 determined in the controller 1201 and multiplexes the first and second pilots to construct an S-UI-DPCCH. As described above, the second pilot 1221 may employ a pattern equal to or different from that of the first pilot. When the UE is located in a soft handover region, the controller 1201 inputs the HS-Pilot 1221 to the multiplexer 1227. In contrast, the controller 1201 does not input the HS-Pilot 1221 to the multiplexer 1227 when the UE is not located in a soft handover region.

A multiplexing controller 1202 is a device for controlling the multiplexer 1227 to adjust the set power gain when the transmission powers for the ACK/NACK 1225, CQI 1223, and HS-Pilot 1221 are set to be different. Further, the multiplexing controller 1202 controls the multiplexer 1227 to construct the S_UL_DPCCH structures as illustrated in FIGs. 11A to 11C. In general, the multiplexer 1227 can multiplex S_UL_DPCCH using subframe as a unit. When the UE employs the modified channel compensation schemes as illustrated in FIGs. 11A to 11C, the multiplexing controller 1202 controls multiplexing with the HS-Pilot, when the UE transmits only the CQI or ACK/NACK, or both of the CQI and ACK/NACK. For example, the multiplexing controller 1202 controls the multiplexer 1227 to construct the S_UL_DPCCH as illustrated in the second frame in FIG. 11B when UE transmits the ACK/NACK or both of the ACK/NACK and CQI, and controls the multiplexer 1227 to construct the S_UL_DPCCH as illustrated in the third frame in FIG. 11B when UE transmits only the CQI information.

The summer 1240 sums input uplink signals and outputs the sum to a multiplier 1241. Because the uplink signals summed in the summer 1240 can be identified by the different channelization codes multiplied to the uplink signals, the node B receiving the signals can reproduce proper signals. The multiplier 1241 scrambles the uplink signals from the UE with uplink scrambling codes used by the UE, so that the uplink signals from the UE can be differentiated from uplink signals from other UEs. The signals output from the multiplier 1241 are modulated in a modulator 1242, converted to carrier frequency signals in an RF module 1243, and then transmitted to the node B via an antenna 1244.

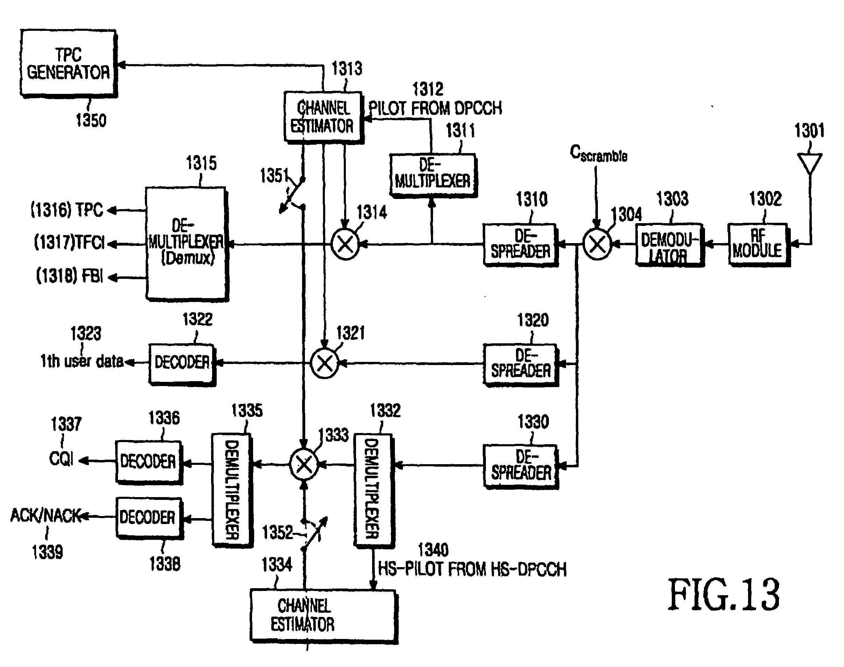

FIG. 13 is a block diagram of a receiver in the node B according to the second embodiment of the present invention. Referring to FIG. 13, signals received through an antenna 1301 from a UE are converted to baseband signals in an RF module 1302. The baseband signals are demodulated in a demodulator 1303 and then descrambled with the same scrambling codes as used by the UE in a multiplier 1304. The scrambling codes used by the UE serve to identify the signals transmitted to UEs from a node B. The signals output from the multiplier 1304 are despread in despreaders 1310, 1320, and 1330, so that the signals are classified into a UL_DPCCH, a UL_DPDCH, and an S_UL_DPCCH. The same channelization codes as used in the UL_DPCCH, UL_DPDCH, and S_UL_DPCCH are applied to the despreaders 1310, 1320, and 1330, respectively. From the UL_DPCCH output from the despreader 1310, only a pilot field 1312 is extracted in the demultiplexer 1311 and is then input to a channel estimator 1313. The pilot field 1312 is used in estimating an uplink channel condition from the UE to the node B. After the intensity of the pilot signal is estimated, the node B generates a TPC command for transmission power control of the UL_DPCH using the intensity of the pilot signal. The controller 1350 generates a TPC command for the UL_DPCH with a channel estimation value from a channel estimator 1313 for a pilot field of the UL-DPCCH. The UL_DPCCH input to the multiplier 1314 is compensated with the channel estimation value calculated in the channel estimator 1313 and is then demultiplexed into TPC 1316, TFCI 1317, and FBI 1318.

The UL_DPDCH output from the despreader 1320 is compensated with the channel estimation value of the channel estimator 1313 in the multiplier 1321 and is then restored to the i^{th} user data or higher layer signaling message in a decoder 1322 which is assumed to be capable of performing an inverse rate matching function also.

From the S-UL_DPCCH output from the despreader 1330, only a pilot field 1340 is extracted in the demultiplexer 1332. In this case, it is assumed that the demultiplexer 1332 monitors whether the HS-Pilot is transmitted. The HS-Pilot according to the present invention is transmitted for separate channel estimation for the S_UL_DPCCH only when information is transmitted to the S_UL_DPCCH. Therefore, it is necessary for the node B to monitor whether the HS-Pilot is transmitted or not. Meanwhile, when the node B performs the usual channel estimation and compensation as illustrated in FIG. 11A, it is required that the multiplexer 1332 detects the HS-Pilot using subframe as a unit. However, when the node B performs the modified channel estimation and compensation as illustrated in FIGs. 11B and 11C, it is required that the multiplexer 1332 should be capable of detecting the HS-Pilot also from adjacent subframes. For example, when the UE transmits the ACK/NACK or the ACK/NACK and CQI as illustrated in the second subframe in FIG. 11B, it is required that the multiplexer 1332 detect the HS-Pilot of the subframe N-1 and perform the channel estimating with the HS-Pilot. Further, when the UE transmits only CQI information as illustrated in the third subframe in FIG. 11B, it is required that the multiplexer 1332 should be capable of detecting the HS-Pilot of the subframe N and performing the channel estimating with the HS-Pilot.

The HS-Pilot of the S-UL_DPCCH 1340 is input to and channel-cstimated in a channel estimator 1334. The S-UL_DPCCH channel-compensated in the multiplier 1333 is divided into ACK/NACK and channel report information in a demultiplexer 1335, which are then restored to channel measurement information 1337 and ACK/NACK 1339 in decoders 1336 and 1338, respectively. The decoders 1336 and 1338 are defined as decoders having the same codes and decoding function for repetitive transmission as used by the UE.

Switches 1351 and 1352 connected to the channel estimators 1313 and 1334, respectively, can be controlled to adjust the channel estimation value input to the multiplier 1333, thereby enabling a separate channel estimation for the S_UL_DPCCH according to whether the UE is located in the soft handover region. That is, when the UE is not located in the soft handover region, the S_UL_DPCCH can be channel-compensated with the channel estimation value for the pilot field of the UL_DPCCH. In contrast, when the UE is located in the soft handover region, the S_UL_DPCCH can be channel-compensated with the channel estimation value for the pilot field of the S_UL_DPCCH. Even when separate power control is not carried out for the S_UL_DPCCH while the S_UL_DPCCH is transmitted, the HS-Pilot field of the S_UL_DPCCH may be separately measured and channel-compensated to thereby improve performance of the S_UL_DPCCH.

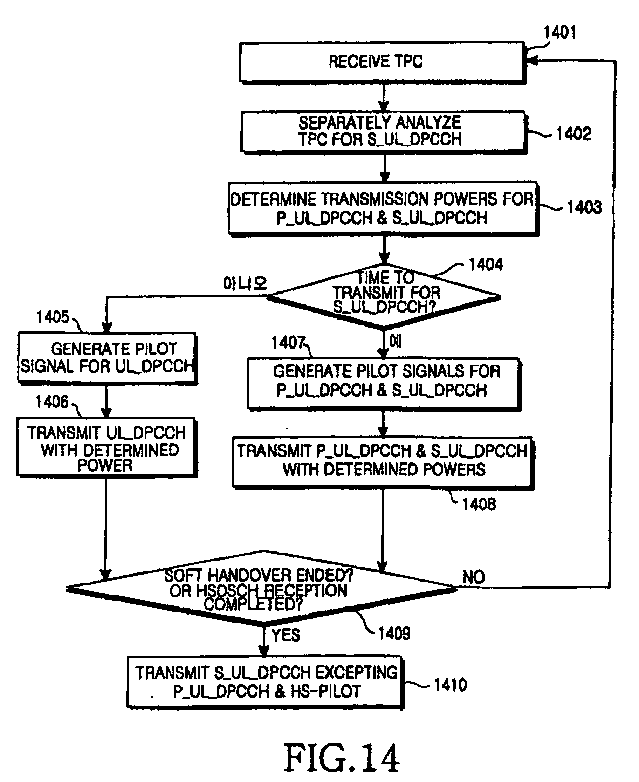

FIG. 14 illustrates an algorithm of a UE controller according to the second embodiment of the present invention. Referring to FIG. 14, the UE receives a TPC command from a node B in step 1401. The UE analyzes the TPC in step 1402 and sets transmission powers for the S_UL_DPCCH and the P_UL_DPCCH in step 1403. In general, the value of the transmission power for the S_UL_DPCCH is determined by a proportion between the transmission powers of the S_UL_DPCCH and the UL_DPCCH. When it has been determined in step 1404 that it is a time point to transmit the S_UL_DPCCH, pilot signals for the S_UL_DPCCH and the P_UL_DPCCH are generated in step 1407. In step 1408, the P_UL_DPCCH and corresponding UL_DPDCH are transmitted with the transmission powers determined in step 1403, and the S_UL_DPCCH is transmitted with the transmission power determined in step 1403. Step 1405 follows step 1404 when it is determined in step 1404 that it is not the time point to transmit the S_UL_DPCCH. In step 1405, a pilot signal for the UL_DPCCH is generated. In step 1406, the P_UL_DPCCH and corresponding UL_DPDCH are transmitted with the transmission power determined in step 1403.

In step 1409, it is determined whether the UE has escaped from the soft handover region or not and whether or not there is any more HS-DSCH to be received, even if the UE is located in the soft handover region. When the UE has escaped from the soft handover region or there is no more HS-DSCH to be received, the S_UL_DPCCH and the UL_DPCCH without the HS-Pilot are transmitted in step 1410, so that normal channel compensation for the uplink dedicated physical channels can be carried out. From the judgment in step 1409, when the soft handover has not been completed or there is another HS-DSCH to he received in the soft handover region, the procedure will be repeated from step 1401.

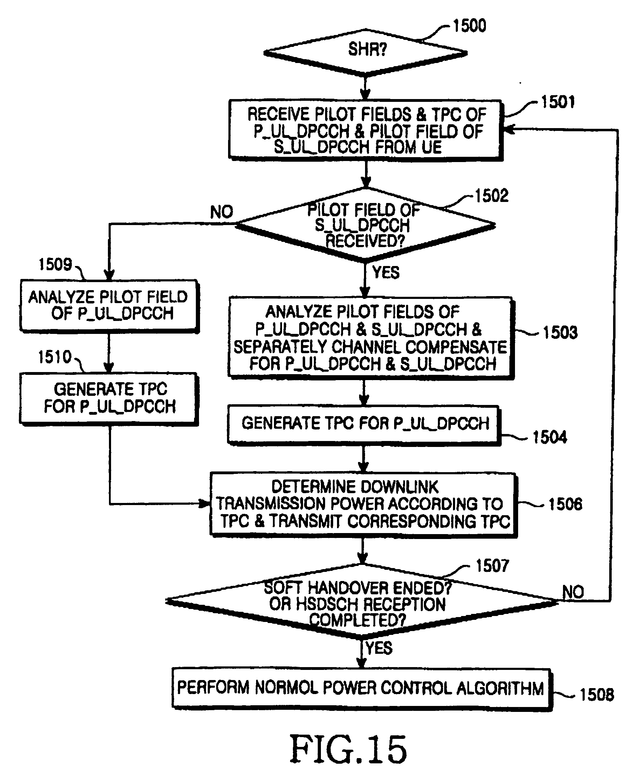

FIG. 15 illustrates an algorithm of a node B controller according to the second embodiment of the present invention. Referring to FIG. 15, in step 1500, the node B determines whether a UE receiving an HS-DSCH from the node B is located in a soft handover region. As stated above, it is natural that the node B performs the determination, because the node B receives information about intensities of signals from other node Bs measured by the UE and determines whether to permit the UE to communicate with other node Bs in the soft handover region. In step 1501, the node B receives a pilot field and TPC command of the P_UL-DPCCH and a pilot field of S-UL-DPCCH from the UE. When the node B receives the S-UL_DPCCH in step 1501, the S-UL_DPCCH may have different structures according to whether the UE is located in the soft handover region or not. That is, when the UE is not located in the soft handover region, the UE is in communication with only one node B that transmits the HS-DSCCH, so that the UE need not send pilot information to the S-UL-DPCCH for transmission power control of the S-UL-DPCCH. Therefore, when the UE is not located in the soft handover region, the S-UL-DPCCH may have a format without a pilot field from among the various formats illustrated in FIGs. 8A to 8D. Also, the S-UL-DPCCH may have the same format regardless of whether the UE is located in the soft handover region or not.

In step 1502, the node B determines whether it has received an exact pilot field of the S-UL-DPCCH. When the node B has concluded that an exact pilot field of the S-UL-DPCCH has not been received in step 1502, the node B analyzes the pilot field of the UL_DPCCH in step 1509 and generates a TPC command for the UL_DPCCH in step 1510. When the node B has confirmed reception of an exact pilot field of the S-UL-DPCCH, the node B analyzes the pilot fields of the P_UL_DPCCH and the S_UL_DPCCH in step 1503. In step 1503, the analysis of the pilot fields of the UL_DPCCHs is utilized in generating TPC commands for the UL_DPCCH and in channel estimation for the UL_DPCCH and the UL_DPDCH. Further, the pilot field of the S_UL_DPCCH is used in channel estimation for channel-compensating the S_UL_DPCCH. In step 1504, after the channel estimation with the pilots of the UL_DPCCH and S_UL_DPCCH, channel compensation for each channel is performed.

In step 1504, a TPC command is generated from the UL_DPCCH obtained in step 1503. In step 1506, downlink transmission power is set according to the downlink power control command received in step 1501. Thereafter, a corresponding TPC command is transmitted together with other downlink signals transmitted from the node B to the UE.

In step 1507, the node B determines whether the UE in communication with the node B has escaped from the soft handover region or whether transmission of the HS-DSCH to the UE has been completed. When the UE has escaped from the soft handover region or the transmission of the HS-DSCH to the UE has been completed, a normal channel compensation algorithm for the uplink dedicated physical channels is performed using only the pilot field of the UL_DPCCH in step 1508. In the opposite case, the procedure will be repeated from step 1501.

The present invention provides a method for uplink transmission power control between a UE and a node B using HSDPA, in which power for an uplink dedicated physical channel for a downlink dedicated physical channel and power for a secondary uplink dedicated physical channel for uplink transmission of HSDPA uplink control information can be separately controlled. Therefore, the present invention provides an apparatus and method, which enable a node B to receive a correct secondary uplink dedicated physical control channel. Further, the present invention presents an apparatus and a method for separately channel-compensating or power-controlling an uplink dedicated physical channel and a secondary uplink dedicated physical channel, in which the secondary uplink dedicated physical channel employs a pilot field, thereby enabling the node B to separately generate a channel compensation value or power control command for the uplink dedicated physical channel and the secondary uplink dedicated physical channel.

## Claims

1. A method for uplink transmission power control in a CDMA communication system including:
a first node B (101) simultaneously providing high speed packet data through a high speed data shared channel and dedicated data through a downlink dedicated physical channel;
at least one second node B (103) located adjacent to the first node B; and
a user equipment (UE) (111) for controlling powers of first and second uplink dedicated control channels, when the UE is located in a soft handover region in which the second node B provides dedicated data through a downlink dedicated physical channel, the UE transmitting dedicated data through an uplink dedicated data channel and control information through the first uplink dedicated control channel to the first and second node Bs, the control information including transmission power control information (612, 1212) and pilot bit information required in receiving the dedicated data, the UE transmitting confirmation information indicating whether the high speed packet data is received and downlink channel status information between the first node B and the UE through the second uplink dedicated control channel, the second uplink dedicated control channel having a subframe comprised of three slots,
the method comprising the steps of, in the UE:
transmitting said subframe after assigning the pilot bit information to at least one of the three slots;
receiving the transmission power control information through the downlink dedicated physical channel from the first node B, the transmission power control information corresponding to said pilot bit information; and
controlling transmission power for said second uplink dedicated control channel with the transmission power control information.

2. The method of claim 1, wherein the transmission power control information is received at a predetermined transmission time point, and transmission power control information corresponding to pilot bit information transmitted through the second uplink dedicated control channel is received during at other time points than the predetermined transmission time point.

3. The method of claim 1wherein the pilot bit information is discontinuously transmitted (DTX) through the second uplink dedicated control channel when the UE is not located in the soft handover region.

4. The method of claim 1 , wherein the transmission power for the second uplink dedicated control channel is set as a predetermined critical value when the transmission power for the second uplink dedicated control channel controlled by the control information exceeds the predetermined critical value.

5. The method of claim 1, wherein the pilot bit information carried by the subframe is located between the confirmation information and the downlink channel information.

6. The method of claim 1 , wherein the pilot bit information is transmitted in a final sector of a subframe just before the subframe carrying the confirmation information and the downlink channel information.

7. The method of claim 1, wherein the pilot bit information is transmitted prior to the confirmation information and the downlink channel information, when the pilot information is carried by the subframe.

8. A method for uplink transmission power control in a CDMA communication system including:
a first node B (101) simultaneously providing high speed packet data through a high speed data shared channel and dedicated data through a downlink dedicated physical channel, the first node B controlling powers of first and second uplink dedicated control channels;
at least one second node B (103) located adjacent to the first node B; and
a user equipment (UE) (111) for transmitting dedicated data through an uplink dedicated data channel and control information through the first uplink dedicated control channel to the first and second node Bs when the UE is located in a soft handover region in which the second node B provides dedicated data through a downlink dedicated physical channel, the control information including transmission power control information and pilot bit information required in receiving the dedicated data, the UE transmitting confirmation information indicating whether the high speed packet data is received and downlink channel status information between the first node B and the UE through the second uplink dedicated control channel, the second uplink dedicated control channel having a subframe comprised of three slots,
the method comprising the steps of, in the node B:
generating second transmission power control information for power control of the second uplink dedicated control channel, corresponding to said pilot bit information carried by at least one of the three slots; and
transmitting the second transmission power control information through said downlink dedicated physical channel at a transmission time point for the second transmission power control information.

9. The method of claim 8, further comprising the steps of:
generating a first transmission power control information for controlling the power of the first uplink dedicated control channel corresponding to the pilot bit information carried by the first uplink dedicated control channel; and
transmitting the first transmission power control information through the downlink dedicated physical channel at time points different than the time point of transmitting the second transmission power control information.

10. The method of claim 9, wherein the transmission power of the downlink dedicated physical channel is controlled by the transmission power control information transmitted through the first uplink dedicated control channel.

11. The method of claim 8 , wherein the pilot bit information carried by the subframe is located between the confirmation information and the downlink channel information.

12. The method of claim 8, wherein the pilot bit information is transmitted in a final sector of a subframe just before the subframe carrying the confirmation information and the downlink channel information.

13. The method of claim 8 , wherein the pilot bit information is transmitted prior to the confirmation information and the downlink channel information when the pilot information is carried by the subframe.

14. An apparatus for uplink transmission power control in a CDMA communication system including:
a first node B (101) simultaneously providing high speed packet data through a high speed data shared channel and dedicated data through a downlink dedicated physical channel;
at least one second node B (103) located adjacent to the first node B; and
a user equipment (UE) (111) for controlling powers of first and second uplink dedicated control channels, when the UE is located in a soft handover region in which the second node B provides dedicated data through a downlink dedicated physical channel, the UE transmitting dedicated data through an uplink dedicated data channel and control information through the first uplink dedicated control channel to the first and second node Bs, the control information including transmission power control information (612, 1212) and pilot bit information required in receiving the dedicated data, the UE transmitting confirmation information indicating whether the high speed packet data is received and downlink channel status information between the first node B and the UE through the second uplink dedicated control channel, the second uplink dedicated control channel having a subframe comprised of three slots,
the user equipment comprising:
a transmitter adapted to transmit the subframe after assigning the pilot bit information to at least one of the three slots; and
a receiver adapted to receive the transmission power control information through the downlink dedicated physical channel from the first node B, the transmission power control information corresponding to said pilot bit information, and to control transmission power for said second uplink dedicated control channel with the transmission power control information.

15. The apparatus of claim 14, wherein the transmitter receives the transmission power control information at a predetermined transmission time point and receives transmission power control information corresponding to pilot bit information transmitted through the second uplink dedicated control channel during at other time points than the predetermined transmission time point.

16. The apparatus of claim 14, wherein the transmitter discontinuously transmits (DTX) the pilot bit information through the second uplink dedicated control channel, when the UE is not located in the soft handover region.

17. The apparatus of claim 14, wherein the transmitter sets the transmission power for the second uplink dedicated control channel as a predetermined critical value when the transmission power for the second uplink dedicated control channel controlled by the control information exceeds the predetermined critical value.

18. The apparatus of claim 14 , wherein the transmitter transmits the subframe in which the pilot bit information is located, between the confirmation information and the downlink channel information.

19. The apparatus of claim 14, wherein the pilot bit information transmitted by the transmitter is located in a final sector of a subframe just before the subframe carrying the confirmation information and the downlink channel information.

20. The apparatus of claim 14 , wherein the transmitter transmits the pilot bit information prior to the confirmation information and the downlink channel information, when the pilot information is carried by the subframe.

21. An apparatus for uplink transmission power control in a CDMA communication system including:
a first node B (101) simultaneously providing high speed packet data through a high speed data shared channel and dedicated data through a downlink dedicated physical channel, the first node B controlling powers of first and second uplink dedicated control channels;
at least one second node B (103) located adjacent to the first node B; and
a user equipment (UE) (111) for transmitting dedicated data through an uplink dedicated data channel and control information through the first uplink dedicated control channel to the first and second node Bs when the UE is located in a soft handover region in which the second node B provides dedicated data through a downlink dedicated physical channel, the control information including transmission power control information and pilot bit information required in receiving the dedicated data, the UE transmitting confirmation information indicating whether the high speed packet data is received and downlink channel status information between the first node B and the UE through the second uplink dedicated control channel, the second uplink dedicated control channel having a subframe comprised of three slots,
the node B comprising:
a receiver adapted to obtain a second channel estimation result corresponding to said pilot bit information carried by at least one of the three slots; and
a transmitter adapted to generate second transmission power control information for power control of the second uplink dedicated control channel and to transmit the second transmission power control information through said downlink dedicated physical channel at a transmission time point for the second transmission power control information.

22. The apparatus of claim 21, wherein:
the receiver generates a first transmission power control information for controlling the power of the first uplink dedicated control channel corresponding to the pilot bit information carried by the first uplink dedicated control channel; and
the transmitter transmits the first transmission power control information through the downlink dedicated physical channel at time points different than the time point of transmitting the second transmission power control information.

23. The apparatus of claim 22, wherein transmitter controls the transmission power of the downlink dedicated physical channel by the transmission power control information transmitted through the first uplink dedicated control channel.

24. The apparatus of claim 21, wherein the pilot bit information carried by the subframe is located between the confirmation information and the downlink channel information.

25. The apparatus of claim 21, wherein the pilot bit information is transmitted in a final sector of a subframe just before the subframe carrying the confirmation information and the downlink channel information.

26. The apparatus of claim 21, wherein the pilot bit information is transmitted prior to the confirmation information and the downlink channel information, when the pilot information is carried by the subframe.

## Patentansprüche

1. Verfahren für die Leistungsregelung des Aufwärtskanals in einem CDMA Kommunikationssystem, enthaltend:
einen ersten Knoten B (101), der gleichzeitig Hochgeschwindigkeitspaketdaten durch einen gemeinsamen Hochgeschwindigkeitsdatenkanal und dedizierte Daten über einen dedizierten physikalischen Abwärtskanal liefert;
wenigstens einen zweiten Knoten B (103), der benachbart zum ersten Knoten B liegt; und
eine Benutzereinrichtung (UE) (111) zum Regeln einer Leistung erster und zweiter dedizierter Aufwärtsregelkanäle, wenn sich die UE in einem weichen Übergabebereich befindet, in dem der zweite Knoten B dedizierte Daten über einen dedizierten, physikalischen Abwärtskanal liefert, wobei die UE dedizierte Daten über einen dedizierten Aufwärtsdatenkanal und Steuerinformation durch den ersten dedizierten Aufwärtsregelkanal zu den ersten und zweiten Knoten B sendet, wobei die Steuerinformation Sendeleistungsregelinformation (612,1212) und eine Pitotbitinformation enthält, die beim Empfang der dedizierten Daten benötigt wird, wobei die UE Bestätigungsinformation, die angibt, ob die Hochgeschwindigkeits-paketdaten empfangen werden, und Abwärtskanalstatusinformation zwischen dem ersten Knoten B und der UE über den zweiten dedizierten Aufwärtsregelkanal sendet, wobei der zweite dedizierte Aufwärtsregelkanal einen Teilrahmen hat, der aus drei Schlitzen besteht, wobei das Verfahren in der UE umfasst:
Senden des Teilrahmens nach Zuweisung der Pilotbitinformation zu wenigstens einem der drei Schlitze;
Empfangen der Sendeleistungsregelinformation durch den dedizierten physikalischen Abwärtskanal von dem ersten Knoten B, wobei die Sendeleistungsregelinformation der Pilotbitinformation entspricht; und
Regeln der Sendeleistung für den zweiten dedizierten Aufwärtsregelkanal mit der Sendeleistungsregelinformation.

2. Verfahren nach Anspruch 1, bei dem die Sendeleistungsregelinformation zu einem vorbestimmten Sendezeitpunkt empfangen wird und die Sendeleistungsregelinformation entsprechend der Pilotbitinformation, die über den zweiten dedizierten Aufwärtsregelkanal gesendet wird, während anderer Zeitpunkte als der vorbestimmte Sendezeitpunkt empfangen wird.

3. Verfahren nach Anspruch 1, bei dem die Pilotbitinformation über den zweiten dedizierten Aufwärtsregelkanal diskontinuierlich gesendet wird (DTX), wenn sich die UE in dem weichen Übergabebereich befindet.

4. Verfahren nach Anspruch 1, bei dem die Sendeleistung für den zweiten dedizierten Aufwärtsregelkanal als ein vorbestimmter kritischer Wert eingestellt wird, wenn die Sendeleistung für den zweiten dedizierten Aufwärtsregelkanal, die durch die Regelinformation geregelt wird, den vorbestimmten kritischen Wert überschreitet.

5. Verfahren nach Anspruch 1, bei dem die Pilotbitinformation, die von dem Teilrahmen getragen wird, zwischen der Bestätigungsinformation und der Abwärtskanalinformation liegt.

6. Verfahren nach Anspruch 1, bei dem die Pilotbitinformation in einem Endsektor eines Teilrahmens gerade vor dem Teilrahmen gesendet wird, der die Bestätigungsinformation und die Abwärtskanalinformation trägt.

7. Verfahren nach Anspruch 1, bei dem die Pilotbitinformation vor der Bestätigungsinformation und der Abwärtskanalinformation gesendet wird, wenn die Pilotinformation von dem Teilrahmen getragen wird.

8. Verfahren für die Aufwärtssendeleistungsregelung in einem CDMA Übertragungssystem, enthaltend:
einen ersten Knoten B (101), der gleichzeitig Hochgeschwindigkeitspaketdaten über einen gemeinsamen Hochgeschwindigkeitsdatenkanal und dedizierte Daten über einen dedizierten physikalischen Abwärtskanal liefert, wobei der erste Knoten B Leistungen erster und zweiter dedizierter Aufwärtsregelkanäle regelt;
wenigstens einen zweiten Knoten B (103), der dem ersten B benachbart liegt; und
eine Benutzereinrichtung (UE) (111) zum Senden dedizierter Daten über einen dedizierten Aufwärtsdatenkanal und Steuerinformation über den ersten dedizierten Aufwärtsregelkanal zu den ersten und zweiten Knoten B, wenn die UE sich in einem weichen Übergabebereich befindet, in dem der zweiten Knoten B dedizierte Daten über einen dedizierten physikalischen Abwärtskanal liefert, wobei die Regelinformation Sendeleistungsregelinformation und Pilotbitinformation enthält, die beim Empfang der dedizierten Daten benötigt wird, die UE Bestätigungsinformation sendet, die angibt, ob die Hochgeschwindigkeitspaketdaten empfangen werden, und Abwärtskanalstatusinformation zwischen dem ersten Knoten B und der UE über den zweiten dedizierten Aufwärtsregelkanal, wobei der zweite dedizierte Aufwärtsregelkanal einen Teilrahmen hat, der aus drei Schlitzen besteht,
wobei das Verfahren im Knoten B die Schritte umfasst:
Erzeugen zweiter Sendeleistungsregelinformation für die Leistungsregelung des zweiten dedizierten Aufwärtsregelkanals entsprechend der Pilotbitinformation, die von wenigstens einem der drei Schlitze getragen wird; und
Senden der zweiten Sendeleistungsregelinformation über den dedizierten physikalischen Abwärtskanal zu einem Sendezeitpunkt für die zweite Sendeleistungsregelinformation.

9. Verfahren nach Anspruch 8, weiterhin enthaltend die Schritte:
Erzeugen einer ersten Sendeleistungsregelinformation zur Regelung der Leistung des ersten dedizierten Aufwärtsregelkanals entsprechend der Pilotinformation, die von dem ersten dedizierten Aufwärtsregelkanal getragen wird; und
Senden der ersten Sendeleistungsinformation über den dedizierten physikalischen Abwärtskanal zu Zeitpunkten, die verschieden von dem Zeitpunkt der Sendung der zweiten Sendeleistungsregelinformation sind.

10. Verfahren nach Anspruch 9, bei dem die Sendeleistung des dedizierten physikalischen Abwärtskanals durch die Sendeleistungsregelinformation geregelt wird, die über den ersten dedizierten Aufwärtsregelkanal gesendet wird.

11. Verfahren nach Anspruch 8, bei dem die Pilotbitinformation, die von dem Teilrahmen getragen wird, zwischen der Bestätigungsinformation und der Abwärtskanalinformation liegt.

12. Verfahren nach Anspruch 8, bei dem die Pilotbitinformation in einem Endsektor eines Teilrahmens gerade vor dem Teilrahmen gesendet wird, der die Bestätigungsinformation und die Abwärtskanalinformation trägt.

13. Verfahren nach Anspruch 8, bei dem die Pilotbitinformation vor der Betätigungsinformation und der Abwärtskanalinformation gesendet wird, wenn die Pilotinformation von dem Teilrahmen getragen wird.

14. Vorrichtung für die Leistungsregelung des Aufwärtskanals in einem CDMA Kommunikationssystem, enthaltend:
einen ersten Knoten B (101), der gleichzeitig Hochgeschwindigkeitspaketdaten über einen gemeinsamen Hochgeschwindigkeitsdatenkanal und dedizierte Daten über einen dedizierten physikalischen Abwärtskanal liefert;
wenigstens einen zweiten Knoten B (103), der sich benachbart dem ersten Knoten B befindet; und
eine Benutzereinrichtung (UE) (111) zur Regelung von Leistungen erster und zweiter dedizierter Aufwärtsregelkanäle, wenn sich die UE in einem weichen Übergabebereich befindet, in dem der zweite Knoten B dedizierte Daten über einen dedizierten physikalischen Abwärtskanal liefert, wobei die UE dedizierte Daten über einen dedizierten Aufwärtsdatenkanal und Regelinformation über den ersten dedizierten Aufwärtsregelkanal zu den ersten und zweiten Knoten B sendet, wobei die Regelinformation Sendeleistungsregelinformation (612,1212) und Pilotbitinformation, die beim Empfang der dedizierten Daten benötigt wird, enthält, die UE Bestätigungsinformation sendet, die angibt, ob die Hochgeschwindigkeitspaketdaten empfangen werden, sowie Abwärtskanalstatusinformation zwischen dem ersten Knoten B und der UE über den zweiten dedizierten Aufwärtsregelkanal, wobei der zweite dedizierte Aufwärtsregelkanal einen Teilrahmen hat, der aus drei Schlitzen besteht,
wobei die Benutzereinrichtung enthält:
einen Sender, der dazu eingerichtet ist, den Teilrahmen nach Zuweisung der Pilotbitinformation zu wenigstens einem der drei Schlitze zu senden; und
einen Empfänger, der dazu eingerichtet ist, die Sendeleistungsregelinformation über den dedizierten physikalischen Abwärtskanal von dem ersten Knoten B zu empfangen, wobei die Sendeleistungsregelinformation der Pilotbitinformation entspricht, und die Sendeleistung für den zweiten dedizierten Aufwärtsregelkanal mit der Sendeleistungsregelinformation zu regeln.

15. Vorrichtung nach Anspruch 14, bei der Sender die Sendeleistungsregelinformation zu einem vorbestimmten Sendezeitpunkt empfängt und Sendeleistungsregelinformation entsprechend der über den zweiten dedizierten Aufwärtsregelkanal während anderer Zeitpunkte als den vorbestimmten Sendezeitpunkt empfängt.

16. Vorrichtung nach Anspruch 14, bei der der Sender die Pilotbitinformation über den zweiten dedizierten Aufwärtsregelkanal diskontinuierlich sendet (DTX), wenn sich die UE nicht in dem weichen Übergabebereich befindet.

17. Vorrichtung nach Anspruch 14, bei dem der Sender die Sendeleistung für den zweiten dedizierten Aufwärtsregelkanal als einen vorbestimmten kritischen Wert einstellt, wenn die Sendeleistung für den zweiten dedizierten Aufwärtsregelkanal, die durch die Regelinformation geregelt wird, den vorbestimmten kritischen Wert überschreitet.

18. Vorrichtung nach Anspruch 14, bei der der Sender den Teilrahmen, in dem sich die Pilotbitinformation befindet, zwischen der Bestätigungsinformation und der Abwärtskanalinformation sendet.

19. Vorrichtung nach Anspruch 14, bei der die von dem Sender gesendete Pilotbitinformation in einem Endsektor eines Teilrahmens gerade vor dem Teilrahmen liegt, der die Bestätigungsinformation und die Abwärtskanalinformation trägt.

20. Vorrichtung nach Anspruch 14, bei der der Sender die Pilotbitinformation vor der Bestätigungsinformation und der Abwärtskanalinformation sendet, wenn die Pilotinformation von dem Teilrahmen getragen wird.

21. Vorrichtung für die Leistungsregelung des Aufwärtskanals in einem CDMA Kommunikationssystem, enthaltend:
einen ersten Knoten B (101), der gleichzeitig Hochgeschwindigkeitspaketdaten über einen gemeinsamen Hochgeschwindigkeitsdatenkanal und dedizierte Daten über einen dedizierten physikalischen Abwärtskanal liefert, wobei der erste Knoten B Leistungen erster und zweiter dedizierter Aufwärtsregelkanäle regelt;
wenigstens einen zweiten Knoten B (103), der sich benachbart dem ersten Knoten befindet; und
eine Benutzereinrichtung UE (111) zum Senden dedizierter Daten über einen dedizierten Aufwärtsdatenkanal und Regelinformation über den ersten dedizierten Aufwärtsregelkanal zu den ersten und zweiten Knoten B, wenn die UE sich in einem weichen Übergabebereich befindet, indem der zweite Knoten B dedizierte Daten über einen dedizierten physikalischen Abwärtskanal liefert, wobei die Regelinformation Sendeleistungsregelinformation und Pilotbitinformation enthält, die beim Empfang der dedizierten Daten benötigt wird, die UE Bestätigungsinformation sendet, die angibt, ob die Hochgeschwindigkeitspaketdaten empfangen werden, und Abwärtskanalstatusinformation zwischen dem ersten Knoten B und der UE über den zweiten dedizierten Aufwärtsregelkanal, wobei der zweite dedizierte Aufwärtsregelkanal einen Teilrahmen enthält, der aus drei Schlitzen besteht,
wobei der Knoten B enthält:
einen Empfänger, da dazu eingerichtet ist, ein zweites Kanalabschätzungsergebnis entsprechend der von wenigstens einem der drei Schlitze getragenen Pilotbitinformation zu erhalten; und
einen Sender, der dazu eingerichtet ist, zweite Sendeleistungsregelinformation für die Leistungsregelung des zweiten dedizierten Aufwärtsregelkanals zu erzeugen und die zweite Sendeleistungsregelinformation über den dedizierten physikalischen Abwärtskanal zu einem Sendezeitpunkt für die zweite Sendeleistungsregelinformation zu senden.

22. Vorrichtung nach Anspruch 21, bei der:
der Empfänger eine erste Sendeleistungsregelinformation zur Regelung der Leistung des ersten dedizierten Aufwärtsregelkanals entsprechend der von dem ersten dedizierten Aufwärtsregelkanal getragenen Pilotbitinformation zu regeln; und
der Sender die erste Sendeleistungsregelinformation über den dedizierten physikalischen Abwärtskanal zu Zeitpunkten sendet, die verschieden von dem Zeitpunkt der Sendung der zweiten Sendeleistungsregelinformation sind.

23. Vorrichtung nach Anspruch 22, bei der der Sender die Sendeleistung des dedizierten physikalischen Abwärtskanals durch die Sendeleistungsregelinformation regelt, die über den ersten dedizierten Aufwärtsregelkanal gesendet wird.

24. Vorrichtung nach Anspruch 21, bei der die Pilotbitinformation, die von dem Teilrahmen getragen wird, zwischen der Bestätigungsinformation und der Abwärtskanalinformation liegt.

25. Vorrichtung nach Anspruch 21, bei der die Pilotbitinformation in einem Endsektor eines Teilrahmens gerade vor dem Teilrahmen gesendet wird, der die Bestätigungsinformation und die Abwärtskanalinformation trägt.

26. Vorrichtung nach Anspruch 21, bei der die Pilotbitinformation vor der Bestätigungsinformation und der Abwärtskanalinformation gesendet wird, wenn die Pilotbitinformation von dem Teilrahmen getragen wird.

## Revendications

1. Procédé pour une commande de puissance de transmission de liaison montante dans un système de communication AMRC (CDMA pour Code Division Multiple Access) comportant :
un premier noeud B (101) fournissant simultanément des données par paquets à grande vitesse via un canal partagé de transmission de données à grande vitesse et des données dédiées via un canal physique dédié à une liaison descendante ;
au moins un deuxième nceud B (103) disposé de façon adjacente au premier noeud B ; et
un équipement utilisateur (EU) (111) destiné à commander des puissances des premier et deuxième canaux de commande dédiés à une liaison montante, lorsque l'EU se trouve dans une zone de transfert souple dans laquelle le deuxième noeud B fournit des données dédiées via un canal physique dédié à la liaison descendante, l'EU transmettant des données dédiées via un canal de transmission de données dédié à la liaison montante et une information de commande via le premier canal de commande dédié à la liaison montante vers les premier et deuxième noeuds Bs, l'information de commande comportant une information de commande de puissance de transmission (612, 1212) ainsi qu'une information de bit pilote nécessaires lors de la réception des données dédiées, l'EU transmettant une information de confirmation indiquant si les données par paquets à grande vitesse sont reçues ainsi qu'une information de statut de canal en liaison descendante entre le premier noeud B et l'EU via le deuxième canal de commande dédié à la liaison montante, le deuxième canal de commande dédié à la liaison montante ayant une sous-trame comportant trois tranches,
le procédé comprenant les étapes, dans l'EU :
de transmission de ladite sous-trame après avoir assigné l'information de bit pilote à au moins une parmi les trois tranches ;
de réception de l'information de commande de puissance de transmission via le canal physique dédié à la liaison descendante à partir du premier noeud B, l'information de commande de puissance de transmission correspondant à ladite information de bit pilote ; et
de commande d'une puissance de transmission pour ledit deuxième canal de commande dédié à la liaison montante avec l'information de commande de puissance de transmission.

2. Procédé selon la revendication 1, dans lequel l'information de commande de puissance de transmission est reçue à un moment temporel de transmission prédéterminé, et une information de commande de puissance de transmission correspondant à une information de bit pilote transmise via le deuxième canal de commande dédié à la liaison montante est reçue à d'autres moments temporels que le moment temporel de transmission prédéterminé.

3. Procédé selon la revendication 1, dans lequel l'information de bit pilote est transmise d'une manière discontinue (DTX) via le deuxième canal de commande dédié à la liaison montante lorsque l'EU ne se trouve pas dans la zone de transfert souple.

4. Procédé selon la revendication 1, dans lequel la puissance de transmission pour le deuxième canal de commande dédié à la liaison montante est établie comme étant une valeur critique prédéterminée lorsque la puissance de transmission pour le deuxième canal de commande dédié à la liaison montante commandée par l'information de commande dépasse la valeur critique prédéterminée.

5. Procédé selon la revendication 1, dans lequel l'information de bit pilote portée par la sous-trame est située entre l'information de confirmation et l'information de canal de liaison descendante.

6. Procédé selon la revendication 1, dans lequel l'information de bit pilote est transmise dans un secteur final d'une sous-trame immédiatement avant la sous-trame portant l'information de confirmation et l'information de canal de liaison descendante.

7. Procédé selon la revendication 1, dans lequel l'information de bit pilote est transmise avant l'information de confirmation et l'information de canal de liaison descendante, lorsque l'information de pilote est portée par la sous-trame.

8. Procédé pour une commande de puissance de transmission de liaison montante dans un système de communication AMRC comportant :
un premier noeud B (101) fournissant simultanément des données par paquets à grande vitesse via un canal partagé de transmission de données à grande vitesse et des données dédiées via un canal physique dédié à la liaison descendante, le premier noeud B commandant des puissances de premier et deuxième canaux de commande dédiés à la liaison montante ;
au moins un deuxième noeud B (103) disposé de façon à être adjacent au premier noeud B ; et
un équipement utilisateur (EU) (111) destiné à transmettre des données dédiées via un canal de transmission de données dédié à la liaison montante ainsi qu'une information de commande via le premier canal de commande dédié à la liaison montante vers les premier et deuxième noeuds Bs lorsque l'EU se trouve dans une zone de transfert souple dans laquelle le deuxième noeud B fournit des données dédiées via un canal physique dédié à la liaison descendante, l'information de commande comportant une information de commande de puissance de transmission ainsi qu'une information de bit pilote nécessaires lors de la réception des données dédiées, l'EU transmettant une information de confirmation indiquant si les données par paquets à grande vitesse sont reçues ainsi qu'une information de statut de canal en liaison descendante entre le premier noeud B et l'EU via le deuxième canal de commande dédié à la liaison montante, le deuxième canal de commande dédié à la liaison montante.ayant une sous-trame comportant trois tranches,
le procédé comprenant les étapes, dans le noeud B :
de production d'une deuxième information de commande de puissance de transmission pour une commande de puissance du deuxième canal de commande dédié à la liaison montante, correspondant à ladite information de bit pilote portée par au moins une des trois tranches ; et
de transmission de la deuxième information de commande de puissance de transmission via ledit canal physique dédié à la liaison descendante à un moment temporel de transmission pour la deuxième information de commande de puissance de transmission.

9. Procédé selon la revendication 8, comprenant en outre les étapes :
de production d'une première information de commande de puissance de transmission destinée à commander la puissance du premier canal de commande dédié à la liaison montante correspondant à l'information de bit pilote portée par le premier canal de commande dédié à la liaison montante ; et
de transmission de la première information de commande de puissance de transmission via le canal physique dédié à la liaison descendante à des moments temporels différents du moment temporel de transmission de la deuxième information de commande de puissance de transmission.

10. Procédé selon la revendication 9, dans lequel la puissance de transmission du canal physique dédié à la liaison descendante est commandée par l'information de commande de puissance de transmission transmise via le premier canal de commande dédié à la liaison montante.

11. Procédé selon la revendication 8, dans lequel l'information de bit pilote portée par la sous-trame se trouve entre l'information de confirmation et l'information de canal de liaison descendante.

12. Procédé selon la revendication 8, dans lequel l'information de bit pilote est transmise dans un secteur final d'une sous-trame immédiatement avant la sous-trame portant l'information de confirmation et l'information de canal de liaison descendante.

13. Procédé selon la revendication 8, dans lequel l'information de bit pilote est transmise avant l'information de confirmation et l'information de canal de liaison descendante lorsque l'information de pilote est portée par la sous-trame.

14. Dispositif destiné à une commande de puissance de transmission de liaison montante dans un système de communication AMRC comportant :
un premier noeud B (101) fournissant simultanément des données par paquets à grande vitesse via un canal partagé de transmission de données à grande vitesse et des données dédiées via un canal physique dédié à la liaison descendante ;
au moins un deuxième noeud B (103) disposé de façon adjacente au premier noeud B ; et
un équipement utilisateur (EU) (111) destiné à commander des puissances des premier et deuxième canaux de commande dédiés à la liaison montante, lorsque l'EU se trouve dans une zone de transfert souple dans laquelle le deuxième noeud B fournit des données dédiées via un canal physique dédié à la liaison descendante, l'EU transmettant des données dédiées via un canal de transmission de données dédié à la liaison montante et une information de commande via le premier canal de commande dédié à la liaison montante vers les premier et deuxième noeuds Bs, l'information de commande comportant une information de commande de puissance de transmission (612, 1212) ainsi qu'une information de bit pilote nécessaires lors de la réception des données dédiées, l'EU transmettant une information de confirmation indiquant si les données par paquets à grande vitesse sont reçues ainsi qu'une information de statut de canal en liaison descendante entre le premier noeud B et l'EU via le deuxième canal de commande dédié à la liaison montante, le deuxième canal de commande dédié à la liaison montante ayant une sous-trame comportant trois tranches,
l'équipement utilisateur comprenant :
un émetteur apte à transmettre la sous-trame après avoir assigné l'information de bit pilote à au moins une des trois tranches ; et
un récepteur apte à recevoir l'information de commande de puissance de transmission via le canal physique dédié à la liaison descendante à partir du premier noeud B, l'information de commande de puissance de transmission correspondant à ladite information de bit pilote, et à commander une puissance de transmission pour ledit deuxième canal de commande dédié à la liaison montante avec l'information de commande de puissance de transmission.

15. Dispositif selon la revendication 14, dans lequel l'émetteur reçoit l'information de commande de puissance de transmission à un moment temporel de transmission prédéterminé et reçoit une information de commande de puissance de transmission correspondant à une information de bit pilote transmise via le deuxième canal de commande dédié à la liaison montante à d'autres moments temporels que le moment temporel de transmission prédéterminé.

16. Dispositif selon la revendication 14, dans lequel l'émetteur transmet d'une manière discontinue (DTX) l'information de bit pilote via le deuxième canal de commande dédié à la liaison montante, lorsque l'EU ne se trouve pas dans la zone de transfert souple.

17. Dispositif selon la revendication 14, dans lequel l'émetteur établit la puissance de transmission pour le deuxième canal de commande dédié à la liaison montante comme étant une valeur critique prédéterminée lorsque la puissance de transmission pour le deuxième canal de commande dédié à la liaison montante commandée par l'information de commande dépasse la valeur critique prédéterminée.

18. Dispositif selon la revendication 14, dans lequel l'émetteur transmet la sous-trame dans laquelle l'information de bit pilote se trouve, entre l'information de confirmation et l'information de canal de liaison descendante.

19. Dispositif selon la revendication 14, dans lequel l'information de bit pilote transmise par l'émetteur se trouve dans un secteur final d'une sous-trame immédiatement avant la sous-trame portant l'information de confirmation et l'information de canal de liaison descendante.

20. Dispositif selon la revendication 14, dans lequel l'émetteur transmet l'information de bit pilote avant l'information de confirmation et l'information de canal de liaison descendante, lorsque l'information de pilote est portée par la sous-trame.

21. Dispositif destiné à une commande de puissance de transmission de liaison montante dans un système de communication AMRC comportant :
un premier noeud B (101) fournissant simultanément des données par paquets à grande vitesse via un canal partagé de transmission de données à grande vitesse et des données dédiées via un canal physique dédié à la liaison descendante, le premier noeud B commandant des puissances des premier et deuxième canaux de commande dédiés à la liaison montante ;
au moins un deuxième noeud B (103) disposé de façon adjacente au premier noeud B ; et
un équipement utilisateur (EU) (111) destiné à transmettre des données dédiées via un canal de transmission de données dédié à la liaison montante ainsi qu'une information de commande via le premier canal de commande dédié à la liaison montante vers les premier et deuxième noeuds Bs lorsque l'EU se trouve dans une zone de transfert souple dans laquelle le deuxième noeud B fournit des données dédiées via un canal physique dédié à la liaison descendante, l'information de commande comportant une information de commande de puissance de transmission ainsi qu'une information de bit pilote nécessaires lors de la réception des données dédiées, l'EU transmettant une information de confirmation indiquant si les données par paquets à grande vitesse sont reçues ainsi qu'une information de statut de canal en liaison descendante entre le premier noeud B et l'EU via le deuxième canal de commande dédié à la liaison montante, le deuxième canal de commande dédié à la liaison montante ayant une sous-trame comportant trois tranches,
le noeud B comprenant :
un récepteur apte à obtenir un deuxième résultat d'estimation de canal correspondant à ladite information de bit pilote portée par au moins une des trois tranches ;et
un émetteur apte à produire une deuxième information de commande de puissance de transmission pour une commande de puissance du deuxième canal de commande dédié à la liaison montante, et à transmettre la deuxième information de commande de puissance de transmission via ledit canal physique dédié à la liaison descendante à un moment temporel de transmission pour la deuxième information de commande de puissance de transmission.

22. Dispositif selon la revendication 21, dans lequel :
le récepteur produit une première information de commande de puissance de transmission destinée à commander la puissance du premier canal de commande dédié à la liaison montante correspondant à l'information de bit pilote portée par le premier canal de commande dédié à la liaison montante ; et
l'émetteur transmet la première information de commande de puissance de transmission via le canal physique dédié à la liaison descendante à des moments temporels différents du moment temporel de transmission de la deuxième information de commande de puissance de transmission.

23. Dispositif selon la revendication 22, dans lequel un émetteur commande la puissance de transmission du canal physique dédié à la liaison descendante par l'information de commande de puissance de transmission transmise via le premier canal de commande dédié à la liaison montante.

24. Dispositif selon la revendication 21, dans lequel l'information de bit pilote portée par la sous-trame se trouve entre l'information de confirmation et l'information de canal de liaison descendante.

25. Dispositif selon la revendication 21, dans lequel l'information de bit pilote est transmise dans un secteur final d'une sous-trame immédiatement avant la sous-trame portant l'information de confirmation et l'information de canal de liaison descendante.

26. Dispositif selon la revendication 21, dans lequel l'information de bit pilote est transmise avant l'information de confirmation et l'information de canal de liaison descendante, lorsque l'information de pilote est portée par la sous-trame.
